# EUROPEAN PATENT APPLICATION

(11) **EP 4 539 150 A1**
(43) Date of publication of application: **16.04.2025**
(21) Application number: 24199139.7
(22) Date of filing: 09.09.2024
(51) Int. Cl.: H01M 4/136, H01M 4/58, H01M 4/66, H01M 10/052, H01M 4/36

(54) **CATHODE FOR ALL SOLID SECONDARY BATTERY, AND ALL SOLID SECONDARY BATTERY INCLUDING THE SAME**

(30) Priority: 12.09.2023 KR 20230121174
(71) Applicant: SAMSUNG SDI CO., LTD., Yongin-si, Gyeonggi-do 17084 (KR)
(72) Inventor: Jo, Sungnim, 17084 Gyeonggi-do (KR); Son, Inhyuk, 17084 Gyeonggi-do (KR); Shim, Kyueun, 17084 Gyeonggi-do (KR); Lim, Hyungsub, 17084 Gyeonggi-do (KR); Park, Taehyun, 17084 Gyeonggi-do (KR); Lee, Jieun, 17084 Gyeonggi-do (KR)
(74) Representative: Michalski Hüttermann & Partner Patentanwälte mbB

(57) **Abstract**

A cathode for all solid secondary batteries and an all solid secondary battery including the cathode, an anode, and a solid electrolyte between the cathode and the anode are provided. The cathode includes a cathode current collector, an adhesion binder layer on the cathode current collector and including an adhesion polymer, and a cathode active material layer on the adhesion binder layer and including a composite cathode active material and a cohesion binder, wherein the composite cathode active material includes a Li₂S-containing composite.

## Description

### BACKGROUND

### 1. Field

One or more embodiments of the present disclosure relate to a cathode for an all solid secondary battery and an all solid secondary battery including the cathode.

### 2. Description of the Related Art

To satisfy and fulfill recent industrial demands and/or desires, extensive development has been conducted on batteries providing relatively high energy density and safety. For example, lithium batteries are utilized for one or more suitable purposes in information devices, communication devices, vehicles (e.g., electrical vehicles (EVs)), etc. Because the typical vehicles are related to people's (e.g., users') wellbeing, safety of lithium batteries is important or crucial.

In lithium batteries including a liquid electrolyte, the risk of fire and/or explosions may increase in the event of short circuits. All solid secondary batteries employing a solid electrolyte instead of a liquid electrolyte have been suggested or proposed. Solid electrolytes can or may have a lower risk of ignition than that of liquid electrolytes.

Thus, the risk of fire or explosions can or may be reduced in such all solid secondary batteries by utilizing a solid electrolyte instead of a liquid electrolyte. As such, the all solid secondary batteries can or may provide improved safety.

### SUMMARY

One or more aspects of embodiments of the present disclosure are directed toward a cathode for an all solid secondary battery having improved interlayer adhesion.

One or more aspects of embodiments of the present disclosure are directed toward an all solid secondary battery having improved performance by including the cathode.

Additional aspects will be set forth in part in the description which follows and, in part, will be apparent from the description, or may be learned by practice of the presented embodiments of the present disclosure.

According to one or more embodiments of the present disclosure, a cathode for an all solid secondary battery includes a cathode current collector, an adhesion binder layer on the cathode current collector and including an adhesion polymer, and a cathode active material layer on the adhesive binder layer and including a composite cathode active material and a cohesion binder, wherein the composite cathode active material includes a Li₂S-containing composite.

According to one or more embodiments of the present disclosure, an all solid secondary battery includes the cathode, an anode, and a solid electrolyte between the cathode and the anode.

### BRIEF DESCRIPTION OF THE DRAWINGS

The accompanying drawing is included to provide a further understanding of the present disclosure, and is incorporated in and constitutes a part of this specification. The drawing illustrates example embodiments of the present disclosure and, together with the description, serve to explain principles of present disclosure. The above and other aspects, features, and advantages of certain embodiments of the present disclosure will be more apparent from the following description taken in conjunction with the accompanying drawings, in which:
FIG. 1 is a cross-sectional view of an all solid secondary battery according to one or more embodiments of the present disclosure;
FIG. 2 is a cross-sectional view of an all solid secondary battery according to one or more embodiments of the present disclosure;
FIG. 3 is a cross-sectional view of an all solid secondary battery according to one or more embodiments of the present disclosure;
FIG. 4 is a cross-sectional view of an all solid secondary battery according to one or more embodiments of the present disclosure; and
FIG. 5 is a cross-sectional view of an all solid secondary battery according to one or more embodiments of the present disclosure.

### DETAILED DESCRIPTION

Reference will now be made in more detail to embodiments, examples of which are illustrated in the accompanying drawings, wherein like reference numerals refer to like elements throughout the present disclosure, and duplicative descriptions thereof may not be provided for conciseness. In this regard, the embodiments of the present disclosure may have different forms and should not be construed as being limited to the descriptions set forth herein. Accordingly, the embodiments of the present disclosure are merely described, by referring to the drawings, to explain aspects of the present disclosure. As utilized herein, the term "and/or" or "or" may include any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from among a, b, and c", "at least one selected from among a to c", etc., may indicates only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

Unless otherwise defined, all terms (including technical and scientific terms) utilized herein have the same meaning as commonly understood by one or ordinary skill in the art to which this application belongs. Also, it will be further understood that terms, such as those defined in commonly utilized dictionaries, should be interpreted as having a meaning that is consistent with their meaning in the context of the relevant art and will not be interpreted in an idealized or overly formal sense unless expressly so defined herein.

Example embodiments will be described herein with reference to schematic cross-sectional view of ideal embodiments. As such, variations from the shapes of the illustrations as a result, for example, of manufacturing techniques and/or tolerances, are to be expected. Thus, example embodiments should not be construed as limited to the particular shapes of regions illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the actual shape of a region of a device and are not intended to limit the scope of appended claims.

The present disclosure may, however, be embodied in many different forms and should not be construed as limited to the example embodiments set forth herein. The embodiments are provided so that this disclosure will be thorough and complete, and will fully convey the scope of the present disclosure to those skilled in the art. Like reference numerals in the drawings denote like elements.

It will be understood that when one element is referred to as being "on" another element, it may be directly on the other element, or intervening element(s) may also be present therebetween. In contrast, when one element is referred to as being "directly on" another element, there is no intervening element therebetween.

Although the terms "first", "second", "third", and/or the like may be utilized herein to describe one or more suitable elements, components, regions, layers, and/or sections, these elements, components, regions, layers, and/or sections should not be limited by these terms. These terms are only utilized to distinguish one element, component, region, layer, or section from another element, component, region, layer, or section. Thus, a first element, component, region, layer, or section discussed could be termed a second element, component, region, layer, or section without departing from the teachings herein.

The terms utilized herein is for the purpose of describing particular embodiments only and is not intended to be limiting of the present disclosure. As utilized herein, an expression utilized in the singular encompasses the expression "at least one", unless otherwise indicated. The "at least one" should not be construed as singular. For example, the singular forms "a," "an," "one," and "the" are intended to include the plural forms as well, unless the context clearly indicates otherwise. As utilized herein, the term "and/or" or "or" may include any and all combinations of one or more of the associated listed items. The terms such as "comprise(s)/comprising," "include(s)/including," and/or "have(has)/having" are intended to indicate the existence of features, regions, integers, processes, components, and/or elements disclosed in the disclosure, and are not intended to preclude the possibility that one or more other features, regions, integers, processes, components, and/or elements thereof may exist or may be added. Further, the use of "may" when describing embodiments of the present disclosure refers to "one or more embodiments of the present disclosure".

Spatially relative terms, such as "under", "below", "lower", "on", "above", or "upper", may be utilized herein for ease of description of the relationship of one element or feature to another element(s) or feature(s) as illustrated in the drawings. It will be understood that the spatially relative terms are intended to encompass different orientations of a device in utilization or operation, in addition to the orientation depicted in the drawings. For example, if (e.g., when) the device in the drawings is turned over, elements described as "below" other elements or features would then be oriented "above" the other elements or features. Thus, the example term "below" may encompass both (e.g., simultaneously) an orientation of above and below. The device may be otherwise oriented (for example, rotated 90 degrees or at other orientations) and the spatially relative descriptors utilized herein may be interpreted accordingly.

The term "Group" as utilized herein may refer to a group of elements in the periodic table numbered from 1 to 18 classified according to a classification system of The International Union of Pure and Applied Chemistry ("IUPAC").

In the present disclosure, the term "particle size" or "particle diameter" may indicate an average diameter of spherical particles or an average length of major axes of non-spherical particles. Particle diameters may be measured utilizing a particle size analyzer (PSA). The "particle size" or "particle diameter" may be, example, an average particle diameter. The "average particle diameter" may be, for example, a median particle diameter (D50).

D50 may refer to a particle diameter corresponding to 50 % of particles in a cumulative size distribution curve measured by a laser diffraction method in which the particles are accumulated in the order of particle diameter from the smallest particle to the largest particle.

D90 may refer to a particle diameter corresponding to 90 % of particles in a cumulative size distribution curve measured by a laser diffraction method in which the particles are accumulated in the order of particle diameter from the smallest particle to the largest particle.

D10 may refer to a particle diameter corresponding to 10 % of particles in a cumulative size distribution curve measured by a laser diffraction method in which the particles are accumulated in the order of particle diameter from the smallest particle to the largest particle.

In the present disclosure, the term "metal" may include metals and metalloids such as silicon and germanium in an elemental or ionic state.

In the present disclosure, the term "alloy" may refer to a combination of two or more metals.

In the present disclosure, the term "electrode active material" may refer to a material for electrodes allowing lithiation and delithiation.

In the present disclosure, the term "cathode active material" may refer to a material for cathodes allowing lithiation and delithiation.

In the present disclosure, the term "anode active material" may refer to a material for anodes allowing lithiation and delithiation.

In the present disclosure, the terms "lithiation" and "lithiating" refer to a process of introducing lithium into an electrode active material.

In the present disclosure, the terms "delithiation" and "delithiating" refer to a process of removing lithium from an electrode active material.

In the present disclosure, the terms "charging" and "charge" refer to a process of supplying electrochemical energy to a battery.

In the present disclosure, the terms "discharging" and "discharge" refer to a process of removing electrochemical energy from a battery.

In the present disclosure, the terms "positive electrode" and "cathode" refer to an electrode in which electrochemical reduction and lithiation occur during discharging.

The term "length", "thickness", and "width" as utilized herein refers to, for example, an average length, an average thickness, and an average width respectively. The "length", "thickness", and "width" measured utilizing software from a scanning electron microscope image.

In the present disclosure, the terms "negative electrode" and "anode" refer to an electrode in which electrochemical oxidation and delithiation occur during discharging.

While particular embodiments will be described herein, alternatives, modifications, variations, improvements, and substantial equivalents that are or may be presently unforeseen may arise to applicants or others skilled in the art. Accordingly, the appended claims as filed and as they may be amended are intended to embrace all such alternatives, modification, variations, improvements, and substantial equivalents.

Hereinafter, a cathode for an all solid secondary battery and an all solid secondary battery including the cathode according to one or more embodiments will be described in more detail.

### Cathode

A cathode for an all solid secondary battery according to one or more embodiments may include: a cathode current collector; an adhesion binder layer on the cathode current collector and including an adhesion polymer; and a cathode active material layer on the adhesion binder layer and including a composite cathode active material and a cohesion binder, wherein the composite cathode active material includes a Li₂S-containing composite.

In cathodes for all solid secondary batteries utilizing a lithium sulfide as a cathode active material, it is desirable and beneficial to improve adhesion between a substrate and a lithium sulfide active material-containing electrode to prevent or reduce detachment from the substrate caused by contraction and expansion of the electrode during charging and discharging and to improve electronic conductivity.

The present disclosure may provide a cathode having excellent or suitable electrochemical properties without being detached from a surface of a substrate even after repeated contraction and expansion caused during charging and discharging, by forming an adhesion binder layer between a cathode active material layer and the substrate and by utilizing the cathode active material layer including a cohesion binder, so as to improve adhesion between the cathode active material layer including a Li₂S-containing composite and the substrate and to reduce interfacial resistance therebetween.

The composite cathode active material, as a Li₂S-containing composite, may include a composite of Li₂S and a lithium salt; and a sulfide-based solid electrolyte.

The composite of Li₂S and the lithium salt may be Li₂S-LiₐX_{b} (where 1≤a≤5 and 1≤b≤5), wherein X may be iodine (I), bromine (Br), chlorine (CI), fluorine (F), hydrogen (H), oxygen (O), selenium (Se), tellurium (Te), nitrogen (N), phosphorus (P), arsenic (As), antimony (Sb), aluminum (Al), boron (B), OCI, PF₆, BF₄, SbF₆, AsF₆, ClO₄, AlO₂, AlCl₄, NO₃, CO₃, BH₄, SO₄, BO₃, PO₄, NCl, NCl₂, BN₂, or any combination thereof.

In all solid secondary batteries including a lithium sulfide as a cathode active material, the lithium sulfide is desired or suitable to be combined with a material having high electrical and ionic conductivity because the lithium sulfide is an insulator having low and little electrical and ionic conductivity. The lithium sulfide-containing cathode active material may be detached from the cathode current collector by contraction and expansion caused during charging and discharging, and electronic conductivity may deteriorate, and thus improvements to these properties are desired or beneficial.

Here, the cathode of the present disclosure may further reduce interfacial resistance between the cathode active material layer and the cathode current collector and effectively prevent or reduce deterioration of the sulfide-based solid electrolyte included in the cathode active material layer during operation of a battery, by utilizing a Li₂S-containing composite as a cathode active material, by forming an adhesion binder layer including an adhesion polymer between the cathode current collector and the cathode active material layer, and by utilizing a cohesion binder included in the cathode active material layer.

By forming the adhesion binder layer, deterioration of the sulfide-based solid electrolyte of the cathode active material layer may be effectively prevented or reduced, adhesion between constituent layers of the cathode may be increased, and interfacial resistance between the cathode current collector and the cathode active material layer may be reduced.

A thickness of the adhesion binder layer according to one or more embodiments may be from about 5 nm to about 1 µm, from about 5 nm to about 800 nm, from about 5 nm to about 500 nm, from about 5 nm to about 400 nm, from about 5 nm to about 300 nm, from about 10 nm to about 300 nm, from about 10 nm to about 100 nm, or from about 10 nm to about 50 nm.

According to one or more embodiments, the thickness of the adhesion binder layer may be from about 20 nm to about 1 µm, from about 20 nm to about 800 nm, from about 20 nm to about 500 nm, from about 20 nm to about 300 nm, or from about 20 nm to about 100 nm. If (e.g., when) the thickness of the adhesion binder layer is within the above-described ranges, the interfacial resistance may be reduced, and the sulfide-based solid electrolyte contained in the cathode active material layer may be effectively protected.

The adhesion polymer constituting the adhesion binder layer may include, for example, at least one selected from among polydopamine, cation-substituted polycarboxylic acid and a copolymer thereof, poly(norepinephrine), poly(math)acrylamide, polyvinylalcohol, poly(2-hydroxymethyl(meth)acrylate), a methyl(meth)acrylate-co-(meth)acrylic acid copolymer, polymethyl(meth)acrylate, poly((meth)acrylic acid), and a styrene-co-(meth)acrylic acid copolymer.

The cation-substituted polycarboxylic acid and a copolymer thereof may include at least one cation selected from among a lithium ion (Li⁺), a sodium ion (Na⁺), a potassium ion (K⁺), and an ammonium ion (NH⁴⁺). Polycarboxylic acid may refer to a polymer prepared by polymerization of one or more suitable types (kinds) of monomers including at least one monomer including one or more carboxyl groups (-COOH) by polymerization and has a weight average molecular weight of 1,000 to 1,000,000. Non-limiting examples of the polycarboxylic acid may be polyacrylic acid, polymethacrylic acid, and polymaleic acid. The cation-substituted polycarboxylic acid is a material obtained by substituting hydrogen of polycarboxylic acid with a cation and may include at least one selected from among lithium polyacrylate (LiPAA) and lithium polymethacrylate.

The copolymer of the cation-substituted polycarboxylic acid may be any copolymer including a monomer repeating unit corresponding to the cation-substituted polycarboxylic acid, and non-limiting examples of the copolymer may be poly(acrylic acid-co-maleic acid) lithium salt, and/or poly(methylvinylether-alt-maleic acid) lithium salt, and/or poly(butadiene-co-maleic acid) lithium salt.

In one or more embodiments, at least one of the cation-substituted polycarboxylic acid and/or a copolymer thereof may have a glass transition temperature of 50 °C or above, for example, about 50 °C to about 200 °C, for example, about 50 °C to about 150 °C. In one or more embodiments, at least one of the cation-substituted polycarboxylic acid and/or a copolymer thereof may have a melting point of 100 °C or above, for example, about 100 °C to about 300 °C, for example, about 100 °C to about 200 °C. If (e.g., when) an intermediate layer (e.g., adhesion binder layer) is formed by utilizing the cation-substituted polycarboxylic acid and/or a copolymer thereof having such glass transition temperature and melting point, the shape of the intermediate layer may be maintained at a battery operating temperature (e.g., from about 0 °C to about 90 °C). In one or more embodiments, at least one selected from among the cation-substituted polycarboxylic acid and a copolymer thereof may have a weight average molecular weight of about 1,000 to 1,000,000 and a degree of polymerization of about 10 to about 1500, for example, about 14 to about 1400. Here, weight average molecular weight is measured by a gel permeation chromatography (GPC).

In one or more embodiments, the cation-substituted polycarboxylic acid may be, for example, lithium polyacrylate.

In one or more embodiments, the cohesion binder may be polytetrafluoroethylene, a polyvinylidene fluoride (PVDF)-based resin, a styrene-butadiene rubber (SBR), polytetrafluoroethylene (PTFE), polyethylene glycol (PEG), polypropylene glycol (PPG), toluene diisocyanate (TDI), polymethylmethacrylate, polyacrylonitrile, polyvinylpyrrolidone, polyvinylacetate, a poly(ethylene-co-vinyl acetate) copolymer, polyethylene oxide, cellulose acetate, cellulose acetate butyrate, cellulose acetate propionate, cyanoethyl pullulan, cyanoethyl polyvinylalcohol, cyanoethyl cellulose, cyanoethyl sucrose, pullulan, carboxyl methyl cellulose, a acrylonitrile-styrene-butadiene copolymer, polyimide, or any combination thereof. An amount of the cohesion binder may be from about 0.5 parts by weight to about 10 parts by weight, from about 0.5 parts by weight to about 8 parts by weight, from about 0.5 parts by weight to about 5 parts by weight, from about 0.6 parts by weight to about 3 parts by weight, from about 0.7 parts by weight to about 2 parts by weight, or from about 0.8 parts by weight to about 1.5 parts by weight, based on 100 parts by weight of the cathode active material layer. In some embodiments, the amount of the cohesion binder may be from about 100 parts by weight to about 1000 parts by weight, from about 150 parts by weight to about 950 parts by weight, from about 200 parts by weight to about 900 parts by weight, from about 250 parts by weight to about 850 parts by weight, from about 300 parts by weight to about 800 parts by weight, from about 350 parts by weight to about 750 parts by weight, from about 400 parts by weight to about 700 parts by weight, or from about 450 parts by weight to about 650 parts by weight, based on 100 parts by weight of the adhesion polymer of the adhesion binder layer. If (e.g., when) the amount of the cohesion binder is greater than the above-described ranges, an amount of a lithium sulfide composite becomes relatively low in the cathode active material layer, resulting in deterioration of capacity property. If (e.g., when) the amount of the cohesion binder is less than the above-described ranges, adhesion of the cathode active material layer may deteriorate.

The above-described cathode including the adhesion binder layer not only has improved adhesion between the current collector and the cathode active material layer, but also has improved stability and reliability against mechanical deformation such as bending, thereby having enhanced battery performance. Therefore, in an all solid secondary battery including the cathode including the lithium sulfide as a cathode active material, detachment of the cathode active material from the current collector caused by volume change of the cathode active material may be prevented or reduced and deterioration of battery performance caused by an increased interfacial resistance between the current collector and the cathode active material layer may be prevented or reduced by forming the adhesion binder layer, and therefore a high capacity solid secondary battery may be provided.

The Li₂S-containing composite may include, for example, a composite of Li₂S and a lithium salt.

The composite of Li₂S and the lithium salt having ductility is distinguished from related art oxide-based solid electrolytes having brittleness, e.g., Garnet-type or kind oxide-based solid electrolyte (e.g., Garnet oxide-based solid electrolyte). The composite of Li₂S and the lithium salt having lithium ion conductivity is distinguished from related art lithium-free metal oxides not having lithium ion conductivity, such as alumina. The composite of Li₂S and the lithium salt may be, for example, a product obtained by mechanically milling Li₂S and a lithium salt. The composite of Li₂S and the lithium salt is distinguished from a simple mixture of Li₂S and the lithium salt, because the composite is a product of mechanochemical reaction of Li₂S and the lithium salt. A dense interface cannot be maintained between Li₂S and the lithium salt in the simple mixture of Li₂S and the lithium salt, and thus high interfacial resistance may be provided, thereby increasing internal resistance of a solid electrolyte separator.

The composite of Li₂S and the lithium salt may be represented by Li₂S-LiₐX_{b} (where 1≤a≤5 and 1≤b≤5). X may be I, Br, Cl, F, H, O, Se, Te, N, P, As, Sb, Al, B, OCI, PF₆, BF₄, SbF₆, AsF₆, ClO₄, AlO₂, AlCl₄, NO₃, CO₃, BH₄, SO₄, BO₃, PO₄, NCl, NCl₂, BN₂, or any combination thereof. For example, a may be 1, 2, 3, 4, or 5. For example, b may be 1, 2, 3, 4, or 5. The lithium salt may be, for example, a lithium compound not including sulfur (S). In one or more embodiments, the lithium salt may be, for example, a binary compound or a ternary compound. In some embodiments, the lithium may be, for example, a binary compound including (e.g., consisting of) lithium and one element selected from Groups 13 to 17 of the periodic table. In some embodiments, the lithium salt may be, for example, a ternary compound including (e.g., consisting of) lithium and two elements selected from Groups 13 to 17 of the periodic table. The binary compound may include, for example, Lil, LiBr, LiCI, LiF, LiH, Li₂O, Li₂Se, Li₂Te, LisN, LisP, Li₃As, Li₃Sb, Li₃Al₂, LiBs, or any combination thereof. By including such the binary compound, the composite may have further improved ionic conductivity. Internal resistance of the cathode may further be reduced because a solid electrolyte separator may include such a composite. As a result, cycle characteristics of an all solid secondary battery including the cathode may further be improved. The ternary compound, may include, for example, Li₃OCl, LiPF₆, LiBF₄, LiSbF₆, LiAsF₆, LiClO₄, LiAlO₂, LiAlCl₄, LiNOs, Li₂CO₃, LiBH₄, Li₂SO₄, LisBOs, Li₃PO₄, Li₄NCl, Li₅NCl₂, Li₃BN₂, or any combination thereof. By including such the ternary compound, the composite may have improved ionic conductivity. Internal resistance of the cathode may further be reduced because the cathode includes such a composite. As a result, cycle characteristics of an all solid secondary battery including the solid electrolyte separator may further be improved.

In one or more embodiments, the composite may further include a carbonaceous material. The composite is a composite of Li₂S, a lithium salt, and a carbonaceous material.

The carbonaceous material may be, for example, any material including carbon atoms and commonly available as conductive materials in the art. The carbonaceous material may be, for example, crystalline carbon, amorphous carbon, or any combination thereof. In some embodiments, the carbonaceous material may be, for example, a calcined product of a carbon precursor. In some embodiments, the carbonaceous material may be, for example, a carbon nanostructure (e.g., a carbon structure in a nanometer scale). The carbon nanostructure may be, for example, a one-dimensional carbon nanostructure, a two-dimensional carbon nanostructure, a three-dimensional carbon nanostructure, or any combination thereof. The carbon nanostructure may be, for example, carbon nanotube, carbon nanofiber, carbon nanobelt, carbon nanorod, graphene, or any combination thereof. In some embodiments, the carbonaceous material may be, for example, a porous carbonaceous material or a non-porous carbonaceous material. The porous carbonaceous material may include, for example, periodic and regular two-dimensional or three-dimensional pores. The porous carbonaceous material may be, for example, carbon black such as Ketjen black, acetylene black, Denka black, thermal black, and channel black; graphite; activated carbon; or any combination thereof. The carbonaceous material may be, for example, in a particle form, a sheet form, or a flake form, but embodiments of the present disclosure are not limited thereto, any material commonly available in the art as a carbonaceous material may also be utilized. An amount of the carbonaceous nanostructure contained in the composite of Li₂S, the lithium salt, and the carbonaceous material may be, for example, from about 1 wt% to 20 wt%, from about 5 wt% to 20 wt%, or from about 10 wt% to 20 wt%, based on a total weight, 100 wt%, of the composite. If (e.g., when) the amount of the carbonaceous material excessively increases, energy density of a dry cathode film and all solid secondary battery may decrease. If (e.g., when) the amount of the carbonaceous material excessively decreases, electronic conductivity of the composite of Li₂S, the lithium salt, and the carbonaceous material decreases, resulting an increase in internal resistance of the dry cathode film. As a result, cycle characteristics of the all solid secondary battery may deteriorate.

Each of the lithium salt and the carbonaceous material may have a higher Mohs hardness than that of Li₂S. The Mohs harness of Li₂S is, for example, 0.6 or less. The Mohs hardness of the lithium salt may be 0.7 or more, 0.8 or more, 0.9 or more, 1.0 or more, 1.5 or more, or 2.0 or more. If (e.g., when) the lithium salt has a Mohs hardness within the ranges above, Li₂S may be pulverized more easily during a milling process and a solid solution of Li₂S and a lithium salt may be formed more easily. For example, LiI may have a Mohs hardness of 2.0. The carbonaceous material may have a Mohs hardness of 0.7 or more, 0.8 or more, 0.9 or more, 1.0 or more, 1.2 or more, or 1.5 or more. If (e.g., when) the carbonaceous material has a Mohs hardness within the ranges above, Li₂S may be pulverized more easily during a milling process, and the composite of Li₂S, the lithium salt, and the carbonaceous material may be formed more easily. The carbon nanofiber (CNF) may have a Mohs hardness of 1.5.

In one or more embodiments, the carbonaceous material may include, for example, a fibrous carbonaceous material. Electronic conductivity of the composite of Li₂S, the lithium salt, and the carbonaceous material may further be improved, because the composite of Li₂S, the lithium salt, and the carbonaceous material includes the fibrous carbonaceous material. Electronic conduction from the surface of the composite of Li₂S, the lithium salt, and the carbonaceous material to the inside thereof may be performed more easily, because the composite of Li₂S, the lithium salt, and the carbonaceous material includes the fibrous carbonaceous material. A dry cathode film including the composite of Li₂S, the lithium salt, and the carbonaceous material may have reduced internal resistance, and cycle characteristics of an all solid secondary battery including the dry cathode film may further be improved.

The fibrous carbonaceous material may have an aspect ratio of, for example, 2 or more, 3 or more, 4 or more, 5 or more, 10 or more, or 20 or more. In some embodiments, the fibrous carbonaceous material may have an aspect ratio of, for example, from about 2 to about 30, from about 3 to about 30, from about 4 to about 30, from about 5 to about 30, from about 10 to about 30, or from about 20 to about 30. In some embodiments, the fibrous carbonaceous material may have an aspect ratio of, for example, from about 2 to about 30, from about 2 to about 20, from about 2 to about 10, from about 2 to about 8, from about 2 to about 5, or from about 2 to about 4. If (e.g., when) the aspect ratio of the fibrous carbonaceous material is within the ranges above, overall electronic conductivity of the composite of Li₂S, the lithium salt, and the carbonaceous material may be improved, and local non-uniformity of electronic conductivity may further be reduced in the composite of Li₂S, the lithium salt, and the carbonaceous material.

In one or more embodiments, the fibrous carbonaceous material may include, for example, a carbon nanostructure. The carbon nanostructure may be, for example, carbon nanofiber (CNF), carbon nanotube (CNT), carbon nanobelt, carbon nanorod, or any combination thereof.

The carbon nanostructure may be a primary carbon nanostructure (e.g., a primary particle or structure) formed of a single carbon nanostructure and/or a secondary carbon nanostructure (e.g., a secondary particle or structure) formed of a plurality of primary carbon nanostructures aggregated with each other.

The primary carbon nanostructure may have a diameter of, for example, about 1 nm to about 200 nm, about 1 nm to about 150 nm, about 1 nm to about 100 nm, about 1 nm to about 50 nm, about 1 nm to about 30 nm, or about 1 nm to about 20 nm. The primary carbon nanostructure may have a length of, for example, about 10 nm to about 2 µm, about 10 nm to about 1.5 µm, about 10 nm to about 1 µm, about 10 nm to about 500 nm, about 10 nm to about 400 nm, about 10 nm to about 300 nm, about 10 nm to about 200 nm, or about 10 nm to about 100 nm. The diameter and the length of the primary carbon nanostructure may be measured from images obtained by utilizing a scanning electron microscope (SEM) or a transmission electron microscope (TEM). In some embodiments, the diameter and/or length of the primary carbon nanostructure may be measured by a laser diffraction method.

The secondary carbon nanostructure is a structure (e.g., a secondary particle or structure) formed of the primary carbon nanostructures (e.g., primary particles or structures) aggregated with each other in a totally or partially bundle or a rope form. The secondary carbon nanostructure may include, for example, a bundle-type or kind carbon nanostructure, a rope-type or kind carbon nanostructure, or any combination thereof. The secondary carbon nanostructure may have a diameter of, for example, about 2 nm to about 200 nm, about 3 nm to about 150 nm, about 5 nm to about 100 nm, about 5 nm to about 50 nm, about 5 nm to about 30 nm, or about 5 nm to about 20 nm. The secondary carbon nanostructure may have a length of, for example, about 20 nm to about 2 µm, about 30 nm to about 1.5 µm, about 50 nm to about 1 µm, about 50 nm to about 500 nm, about 50 nm to about 400 nm, about 50 nm to about 300 nm, about 50 nm to about 200 nm, or about 50 nm to about 100 nm or more. The diameter and length of the secondary carbon nanostructure may be measured from images obtained by utilizing an SEM or an optical microscope. In some embodiments, the diameter and/or length of the secondary carbon nanostructure may be measured by a laser diffraction method. The secondary carbon nanostructure may be dispersed in a solvent, and/or the like, to be converted into the primary carbon nanostructures and then utilized for preparation of the composite of Li₂S, the lithium salt, and the carbonaceous material.

The composite of Li₂S and the lithium salt or the composite of Li₂S, the lithium salt, and the carbonaceous material may include a solid solution of Li₂S and the lithium salt. By including the solid solution of Li₂S and the lithium salt, the composite may have improved ionic conductivity. For example, ionic conductivity of the solid solution of Li₂S and the lithium salt may be enhanced compared to ionic conductivity of Li₂S, because the solid solution of Li₂S and the lithium salt includes lithium ions located in Li₂S crystallites. As a result, ionic conductivity of the composite may be improved and internal resistance of the composite may be reduced. Internal resistance of the cathode may further be reduced because the cathode includes such a composite. As a result, cycle characteristics of an all solid secondary battery including the cathode may further be improved.

In one or more embodiments, sizes of Li₂S crystallites obtained in an X-Ray diffraction (XRD) spectrum of The composite of Li₂S and the lithium salt or the composite of Li₂S, the lithium salt, and the carbonaceous material may be, for example, 20 nm or less, 15 nm or less, or 10 nm or less. In some embodiments, the sizes of Li₂S crystallites obtained in the XRD spectra of the composites may be, for example, from about 1 nm to about 20 nm, from about 1 nm to about 15 nm, or from about 3 nm to about 10 nm. As the sizes of the Li₂S crystallites decrease, a contact area between Li₂S and a lithium salt may further increase. As the contact area between Li₂S and the lithium salt increases, ionic conductivity of the composite of Li₂S and the lithium salt may further increase. Internal resistance of the cathode may further be reduced because the cathode includes such a composite. As a result, cycle characteristics of an all solid secondary battery including the cathode may further be improved.

Due to low ionic conductivity of Li₂S, a composite with a lithium salt is formed to overcome these disadvantages. The composite of Li₂S and the lithium salt or the composite of Li₂S, the lithium salt, and the carbonaceous material may provide improved ionic conductivity compared to that of Li₂S alone. In one or more embodiments, an amount of Li₂S in the composite may be from about 50 wt% to about 95 wt%, from about 50 wt% to about 90 wt%, from about 50 wt% to about 80 wt%, or from about 50 wt% to about 70 wt%, based on a total weight, 100 wt%, of the composite of Li₂S and the lithium salt. If (e.g., when) the composite includes Li₂S in the amount ranges described above, a cathode having improved ionic conductivity and durability may be manufactured. In The composite of Li₂S and the lithium salt, an amount of the lithium salt may be from about 5 wt% to about 50 wt%, from about 10 wt% to about 50 wt%, from about 20 wt% to about 50 wt%, or from about 30 wt% to about 50 wt%, based on the total weight, 100 wt%, of the composite of Li₂S and the lithium salt.

In one or more embodiments, in the composite, a molar ratio of Li₂S to the lithium salt may be, for example, from about 50:50 to about 95:5, from about 60:40 to about 95:5, from about 60:40 to about 90:10, from about 65:35 to about 90:10, from about 65:35 to about 85:15, or from about 70:30 to about 85:15. In some embodiments, in the composite, the molar ratio of Li₂S to the lithium salt may be, for example, from about 50:50 to about 95:5, from about 50:50 to about 90:10, from about 50:50 to about 85:15, from about 50:50 to about 80:20, from about 50:50 to about 75:25, or from about 50:50 to about 70:30. If (e.g., when) the molar of Li₂S to the lithium salt is within the ranges described above, cycle characteristics of a lithium battery including the composite cathode active material may further be improved. If (e.g., when) the molar ratio of Li₂S to the lithium salt is too high, effects of the lithium salt on increasing ionic conductivity may be negligible. If (e.g., when) the molar ratio of Li₂S to the lithium salt is too low, energy density of an all solid secondary battery including the composite cathode active material may decrease.

The lithium salt and the carbonaceous material may have a Mohs hardness greater than that of Li₂S. Li₂S may have a Mohs hardness of, for example, 0.6 or less. The Mohs hardness of the lithium salt may be 0.7 or more, 0.8 or more, 0.9 or more, 1.0 or more, 1.5 or more, or 2.0 or more. If (e.g., when) the Mohs hardness of the lithium salt is within the ranges described above, Li₂S may be pulverized more easily during a milling process and a solid solution of Li₂S and a lithium salt may be formed more easily. The Mohs hardness of Lil may be, for example, 2.0. The carbonaceous material may have a Mohs hardness of 0.7 or more, 0.8 or more, 0.9 or more, 1.0 or more, 1.2 or more, or 1.5 or more. If (e.g., when) the Mohs hardness of the carbonaceous material is within the ranges described above, Li₂S may be pulverized more easily during a milling process and the composite of Li₂S, the lithium salt, and the carbonaceous material may be formed more easily. The carbon nanofiber (CNF) may have a Mohs hardness of, for example, 1.5.

In one or more embodiments, in the composite of Li₂S, the lithium salt, and the carbonaceous material, an amount of the lithium salt may be from about 1 wt% to about 40 wt%, from about 5 wt% to about 35 wt%, from about 10 wt% to about 35 wt%, from about 15 wt% to about 35 wt%, from about 20 wt% to about 35 wt%, or from about 25 wt% to about 35 wt%, based on a total weight, 100 wt%, of the composite of Li₂S, the lithium salt, and the carbonaceous material. If (e.g., when) the amount of the lithium salt is too high, energy density of the all solid secondary battery may decrease. If (e.g., when) the amount of the lithium salt is too low, ionic conductivity of the composite of Li₂S, the lithium salt, and the carbonaceous material may deteriorate, resulting in an increase in internal resistance of a dry cathode film. As a result, cycle characteristics of an all solid secondary battery including the dry cathode film may deteriorate.

In one or more embodiments, in the composite of Li₂S, the lithium salt, and the carbonaceous material, a molar ratio of Li₂S to the lithium salt may be, for example, from about 50:50 to about 95:5, from about 60:40 to about 95:5, from about 60:40 to about 90:10, from about 65:35 to about 90:10, from about 65:35 to about 85:15, or from about 70:30 to about 85:15. In some embodiments, in the composite of Li₂S, the lithium salt, and the carbonaceous material, a molar ratio of Li₂S to the lithium salt may be, for example, from about 50:50 to about 95:5, from about 50:50 to about 90:10, from about 50:50 to about 85:15, from about 50:50 to about 80:20, from about 50:50 to about 75:25, or from about 50:50 to about 70:30. If (e.g., when) the molar ratio of Li₂S to the lithium salt is within the ranges described above, cycle characteristics of an all solid secondary battery including the dry cathode film may further be improved. If (e.g., when) the molar ratio of Li₂S to the lithium salt is too high, effects of the lithium salt on increasing ionic conductivity may be negligible. If (e.g., when) the molar ratio of Li₂S to the lithium salt is too low, energy density of an all solid secondary battery including the composite cathode active material may decrease.

In one or more embodiments, The composite of Li₂S and the lithium salt or the composite of Li₂S, the lithium salt, and the carbonaceous material may have an ionic conductivity of, for example, 1×10⁻⁵ S/cm or more, 2×10⁻⁵ S/cm or more, 4×10⁻⁵ S/cm or more, 6×10⁻⁵ S/cm or more, 8×10⁻⁵ S/cm or more, or 1×10⁻⁴ S/cm or more at 25 °C. Ionic conductivity may be measured by, for example, electrochemical impedance spectroscopy, DC polarization method, and/or the like. If (e.g., when) the ionic conductivity of The composite of Li₂S and the lithium salt is within the ranges described above, internal resistance of a cathode including the composite of Li₂S and the lithium salt may further be reduced. Cycle characteristics of an all solid secondary battery including the cathode may be improved.

In one or more embodiments, the Li₂S-containing composite may further include a solid electrolyte. The solid electrolyte may further include a sulfide-based solid electrolyte.

An amount of The composite of Li₂S and the lithium salt may be from about 0.1 wt% to about 20 wt%, from about 0.5 wt% to about 20 wt%, from about 0.5 wt% to about 15 wt%, from about 0.5 wt% to about 10 wt%, or from about 1 wt% to about 5 wt%, based on a total weight, 100 wt%, of the composite of Li₂S, the lithium salt, and the sulfide-based solid electrolyte. An amount of The composite of Li₂S and the lithium salt may be, for example, from about 0.1 wt% to about 20 wt%, from about 0.5 wt% to about 20 wt%, from about 0.5 wt% to about 15 wt%, from about 0.5 wt% to about 10 wt%, or from about 1 to about 5 wt%, based on a total weight, 100 wt%, of the cathode. If (e.g., when) the cathode includes The composite of Li₂S and the lithium salt within the ranges described above, durability of the cathode may further be improved and internal resistance thereof may further be reduced. If (e.g., when) the amount of The composite of Li₂S and the lithium salt is too low, effects thereof may be negligible. If (e.g., when) the amount of The composite of Li₂S and the lithium salt is too high, internal resistance of the cathode may be increased.

The cathode active material layer may include, for example, particles of The composite of Li₂S and the lithium salt and particles of the sulfide-based solid electrolyte. A particle size of The composite of Li₂S and the lithium salt may be smaller than that of the sulfide-based solid electrolyte. In one or more embodiments, the particle size of The composite of Li₂S and the lithium salt may be 90 % or less, 80 % or less, 60 % or less, 40 % or less, 20 % or less, or 10 % or less, of the particle size of the sulfide-based solid electrolyte. The particles of The composite of Li₂S and the lithium salt may be arranged in pores between a plurality of particles of the sulfide-based solid electrolytes. Formation of pin holes may be inhibited in the cathode and internal resistance of the cathode may be reduced, because the particles of The composite of Li₂S and the lithium salt are arranged in pores between the plurality of particles of the sulfide-based solid electrolyte. As a result, durability of the cathode may be improved.

In one or more embodiments, a particle size of the sulfide-based solid electrolyte may be from about 1 µm to about 10 µm, from about 1 µma to about 8 µm, from about 1 µm to about 6 µm, from about 1 µm to about 5 µm, or from about 1 µm to about 3 µm. If (e.g., when) the particle size of the sulfide-based solid electrolyte is within the ranges described above, durability of the cathode may further be improved. In this regard, the particle size of the sulfide-based solid electrolyte may be measured by utilizing a laser diffraction method or a scanning electron microscope (SEM). The particle diameter of the sulfide-based solid electrolyte may be an arithmetic average of particle diameters of a plurality of particles measured utilizing software from a scanning electron microscope image. In one or more embodiments, the particle size of the Li₂S-containing composite, as the composite cathode active material, may be, for example, 10 µm or less, 8 µm or less, 5 µm or less, 2 µm or less, 1.5 µm or less, or 1 µm or less. In some embodiments, the particle size of the composite (e.g., Li₂S-containing composite) may be, for example, from about 1 µm to about 10 µm, from about 2 µm to about 10 µm, from about 2 µm to 8 µm, or from about 3 µm to about 8 µm. In some embodiments, the particle size of the composite may be, for example, from about 0.1 µm to about 10 µm, from about 0.1 µm to about 8 µm, from about 0.1 µm to about 5 µm, from about 0.1 µm to about 2 µm, from about 0.1 µm to about 1.5 µm, or from about 0.1 µm to about 1 µm. With the particle size of the composite within the ranges described above, a volume change may be inhibited during charging and discharging, and deterioration of the composite cathode active material including the composite may be inhibited during charging and discharging. An excessive increase in the particle size of the composite increases a volume change of the composite during charging and discharging, thereby promoting deterioration of the composite cathode active material including the composite. As a result, cycle characteristics of an all solid secondary battery including the composite cathode active material may deteriorate.

In one or more embodiments, a particle size of Li₂S included in the composite cathode active material, i.e., the particle size of Li₂S included in the composite (e.g., Li₂S-containing composite), may be, for example, 2 µm or less, 1.5 µm or less, or 1 µm or less. In some embodiments, the particle size of Li₂S may be, for example, from about 0.1 µm to about 2 µm, from about 0.1 µm to about 1.5 µm, or from about 0.1 µm to about 1 µm. The particles may be arranged in pores between the plurality of sulfide-based solid electrolyte particles more easily, formation of pin holes may be inhibited in the cathode, and internal resistance of the cathode may be reduced, because the particle size of the composite is within the ranges described above. As a result, durability of the cathode may be improved.

In this regard, the particle size of the Li₂S-containing composite may be measured by utilizing a laser diffraction method or a scanning electron microscope (SEM). The particle diameter of the Li₂S-containing composite may be an arithmetic average of particle diameters of a plurality of particles measured utilizing software from a scanning electron microscope image.

In one or more embodiments, a ratio of the particle size of the sulfide-based solid electrolyte to the particle size of the Li₂S-containing composite may be, for example, from about 2:1 to about 200:1, from about 2:1 to about 100:1, or from about 2:1 to about 50:1. If (e.g., when) the ratio of the particle size of the sulfide-based solid electrolyte to the particle size of the Li₂S-containing composite is within the ranges described above, defects may be inhibited in the cathode, thereby improving durability of the cathode. If (e.g., when) the ratio of the particle size of the sulfide-based solid electrolyte to the particle size of the Li₂S-containing composite is too low, porosity of the cathode may excessively increase to reduce durability of the cathode. If (e.g., when) the ratio of the particle size of the sulfide-based solid electrolyte to the particle size of the Li₂S-containing composite is too high, it may be difficult to uniformly disperse the Li₂S-containing composite in the cathode.

If (e.g., when) a cathode including the above-described composite is utilized, there is no need to utilize a lithium metal as an anode, and thus an anode-less all solid secondary battery may be utilized, and an all solid secondary battery having improved energy density may be provided. Cycle characteristics of an all secondary battery including the composite cathode active material may be improved, because the composite of the cathode active material includes such a composition. For example, rate characteristics of a secondary battery including the composite cathode active material may be improved.

In the cathode active material layer, the solid electrolyte may be, for example, a sulfide-based solid electrolyte. The solid electrolyte included in the cathode may be the same as or different from a solid electrolyte included in a solid electrolyte layer. The solid electrolyte included in the cathode active material layer may have a smaller average particle diameter D50 than that of a solid electrolyte included in an electrolyte layer. For example, in some embodiments, an average particle diameter D50 of the solid electrolyte included in the cathode active material layer may be 90% or less, 80% or less, 70% or less, 60% or less, 50% or less, 40 % or less, 30 % or less, or 20 % or less, of an average particle diameter D50 of the solid electrolyte included in the electrolyte layer. The average particle diameter D50 is, for example, a median particle diameter D50. The median particle diameter D50 is a particle diameter corresponding to a 50% cumulative volume calculated from the smallest particle to the largest particle in a particle size distribution measured, for example, by a laser diffraction method.

In one or more embodiments, an amount of the solid electrolyte may be from about 10 parts by weight to about 60 parts by weight, from about 10 parts by weight to about 50 parts by weight, from about 20 parts by weight to about 50 parts by weight, or from about 30 parts by weight to about 50 parts by weight, based on 100 parts by weight of the cathode active material layer.

### All Solid Secondary Battery

An all solid secondary battery according to one or more embodiments may include a cathode, an anode, and a solid electrolyte layer between the cathode and the anode, wherein the cathode includes the above-described cathode.

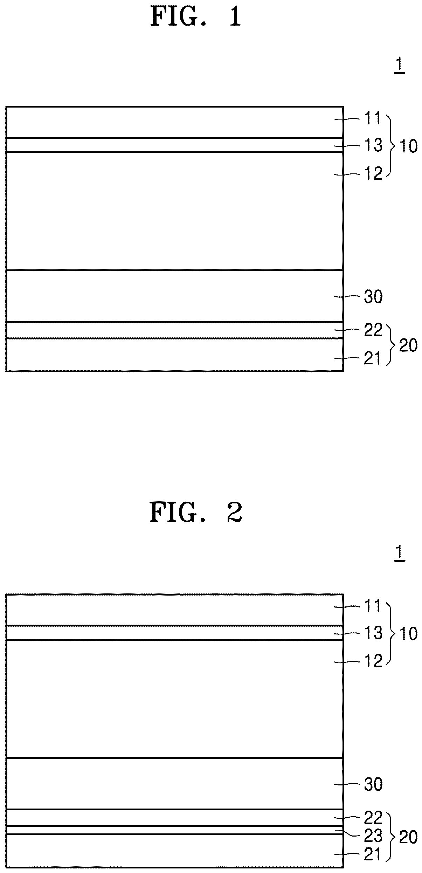

Referring to FIGs. 1 to 5, an all solid secondary battery 1 may include a cathode 10, an anode 20, and a solid electrolyte 30 between the cathode 10 and the anode 20. The cathode 10 may include the cathode according to one or more embodiments of the present disclosure.

### Cathode

### Cathode: Cathode Active Material

Referring to FIGs. 1 to 5, the cathode 10 may include a cathode current collector 11; an adhesion binder layer 13 on one or both (e.g., simultaneously) sides of the cathode current collector 11; and a cathode active material layer 12 disposed thereon. The cathode active material layer 12 may include a Li₂S-containing composite as a cathode active material.

In one or more embodiments, the cathode active material layer 12 may further include another cathode active material different from the above-described composite cathode active material.

The different cathode active material may include, for example, a Li₂S-containing composite. The Li₂S-containing composite may include, for example, a composite of Li₂S and carbon, a composite of Li₂S, carbon, and a solid electrolyte, a composite of Li₂S and a solid electrolyte, a composite of Li₂S, a lithium salt, and carbon, a composite of Li₂S and a metal carbide, a composite of Li₂S, carbon, and a metal carbide, a composite of Li₂S and a metal nitride, a composite of Li₂S, carbon, and a metal nitride, or any combination thereof.

The composite of Li₂S and carbon may include carbon, in addition to Li₂S. The carbon may be, for example, any material including carbon atoms and commonly available as conductive materials in the art. The carbon may be, for example, crystalline carbon, amorphous carbon, or any combination thereof. In some embodiments, the carbon may be, for example, a calcined product of a carbon precursor. In some embodiments, the carbon may be, for example, a carbon nanostructure. The carbon nanostructure may be, for example, a one-dimensional carbon nanostructure, a two-dimensional carbon nanostructure, a three-dimensional carbon nanostructure, or any combination thereof. The carbon nanostructure may be, for example, carbon nanotube, carbon nanofiber, carbon nanobelt, carbon nanorod, graphene, graphene oxide (GO), reduced graphene oxide (rGO), graphene ball (GB), or any combination thereof. In some embodiments, the carbon may be, for example, porous carbon or non-porous carbon. The porous carbon may have, for example, periodic and regular two-dimensional or three-dimensional pores. The porous carbon may be, for example, carbon black such as Ketjen black, acetylene black, Denka black, thermal black, and channel black; graphite; activated carbon; or any combination thereof. The carbon may be, for example, in a particle form, a sheet form, or a flake form, but embodiments of the present disclosure are not limited thereto, any material commonly available in the art as carbon may also be utilized. A method of manufacturing the composite of Li₂S and carbon may be a dry method, a wet method, any combination thereof, but embodiments of the present disclosure are not limited thereto, and any methods commonly available in the art to manufacture the composite of Li₂S and carbon, such as milling, heat treatment, and deposition may also be utilized without limitation.

The composite of Li₂S, carbon, and a solid electrolyte may include carbon and a solid electrolyte, in addition to Li₂S. For descriptions of carbon, reference may refer to the above-described composite of Li₂S and carbon. The solid electrolyte may be an amorphous solid electrolyte commonly available in the art as an ion-conductive material. The solid electrolyte may be, for example, an inorganic solid electrolyte. The solid electrolyte may be, for example, a crystalline solid electrolyte, an amorphous solid electrolyte, or any combination thereof. The solid electrolyte may be, for example, a sulfide-based solid electrolyte, an oxide-based solid electrolyte, or any combination thereof. The sulfide-based solid electrolyte may include, for example, Li, S, and P, and may further include a halogen element. The sulfide-based solid electrolyte may be selected from sulfide-based solid electrolytes utilized in a solid electrolyte layer. The sulfide-based solid electrolyte may have an ionic conductivity of, for example, 1×10⁻⁵ S/cm or more at room temperature. The sulfide-based solid electrolyte may include, for example, at least one selected from among Li₃PO₄-Li₂SO₄, Li₂S-P₂S₅, Li₂S-P₂S₅-LiX (where X is a halogen atom), Li₂S-P₂S₅-Li₂O, Li₂S-P₂S₅-Li₂O-LiI, Li₂S-SiS₂, Li₂S-SiS₂-Lil, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z may be Ge, Zn, or Ga), Li₂S-GeS₂, Li₂S-SiS₂-Li₃PO₄, Li₂S-SiS₂-LiₚMO_{q} (where p and q are positive numbers, and M may be P, Si, Ge, B, Al, Ga, or In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2). The oxide-based solid electrolyte includes, for example, Li, O, and a transition metal element, and may optionally further include another element. The oxide-based solid electrolyte may be, for example, a solid electrolyte having an ionic conductivity of 1×10⁻⁵ S/cm or more at room temperature. The oxide-based solid electrolyte may be selected from oxide-based solid electrolytes utilized in a solid electrolyte layer. In one or more embodiments, the solid electrolyte may be, for example, a mixture of a sulfide-based solid electrolyte and a lithium salt. For example, in some embodiments, the solid electrolyte may include a mixture of Li₃PO₄-Li₂SO₄ and a binary lithium salt or a mixture of Li₃PO₄-Li₂SO₄ and a ternary lithium salt.

The composite of Li₂S and a solid electrolyte may include a solid electrolyte, in addition to Li₂S. For descriptions of the solid electrolyte, reference may refer to the above-described composite of Li₂S, carbon, and the solid electrolyte.

The composite of Li₂S, a lithium salt, and carbon may include a lithium salt compound and carbon, in addition to Li₂S. For example, the lithium salt compound does not include a sulfur (S) atom. In some embodiments, the lithium salt compound may be, for example, a binary compound including (e.g., consisting of) lithium and one element selected from Groups 13 to 17 of the periodic table. The binary compound may include, for example, at least one selected from among LiF, LiCI, LiBr, Lil, LiH, Li₂S, Li₂O, Li₂Se, Li₂Te, LisN, LisP, LisAs, LisSb, Li₃Al₂, and LiBs. In some embodiments, the lithium salt compound may be, for example, a ternary compound including (e.g., consisting of) lithium and two elements selected from Groups 13 to 17 of the periodic table. The ternary compound may include, for example, at least one selected from among Li₃OCl, LiPF₆, LiBF₄, LiSbF₆, LiAsF₆, LiClO₄, LiAlO₂, LiAlCl₄, LiNOs, Li₂CO₃, LiBH₄, Li₂SO₄, LisBOs, Li₃PO₄, Li₄NCl, Li₅NCl₂, and Li₃BN₂. In some embodiments, the lithium salt compound may be, for example, at least one lithium halide compound selected from among LiF, LiCI, LiBr, and Lil. For descriptions of carbon, reference may refer to the above-described composite of Li₂S and carbon.

The composite of Li₂S and a metal carbide may include a metal carbide, in addition to Li₂S. The metal carbide may be, for example, a two-dimensional metal carbide. The two-dimensional metal carbide may be, for example, a MXene. The two-dimensional metal carbide may be represented by, for example, Mₙ₊₁CₙTₓ (where M is a transition metal, T is a terminal group, T is O, OH, and/or F, n=1, 2, or 3, and x is a number of terminal groups). The two-dimensional metal carbide may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, or any combination thereof. The surface of the two-dimensional metal carbide may be terminated with O, OH, and/or F.

The composite of Li₂S, carbon, and a metal carbide may include carbon and a metal carbide, in addition to Li₂S. For descriptions of carbon, reference may refer to the above-described composite of Li₂S and carbon. For descriptions of the metal carbide, reference may refer to the above-described composite of Li₂S and a metal carbide.

The composite of Li₂S and a metal nitride may include a metal nitride, in addition to Li₂S. The metal nitride may be, for example, a two-dimensional metal nitride. In some embodiments, the two-dimensional metal nitride may be represented by, for example, Mₙ₊₁NₙTₓ (where M is a transition metal, T is a terminal group, T is O, OH, and/or F, n=1, 2, or 3, and x is a number of terminal groups). The surface of the two-dimensional metal nitride may be terminated with O, OH, and/or F.

The composite of Li₂S, carbon, and a metal nitride may include carbon and a metal nitride, in addition to Li₂S. For descriptions of carbon, reference may refer to the above-described composite of Li₂S and carbon. For descriptions of the metal nitride, reference may refer to the above-described composite of Li₂S and a metal nitride.

The size of the cathode active material may be, for example, from about 0.1 µm to about 50 µm, from about 0.5 to about 30 µm, from about 0.5 to about 20 µm, or from about 1 to about 10 µm. The size of Li₂S may be, for example, from about 1 nm to about 10 µm, from about 10 nm to about 5 µm, from about 10 nm to about 3 µm, or from about 10 nm to about 1 µm. The size of the Li₂S-containing composite may be, for example, from about 0.1 µm to about 50 µm, from about 0.5 µm to about 30 µm, from about 0.5 µm to about 20 µm, or from about 1 to about 10 µm.

In one or more embodiments, the cathode active material layer 12 may further include, for example, a sulfide-based compound different from the above-described cathode active material. The sulfide-based compound may be, for example, a compound including a metal element other than Li and sulfur. In one or more embodiments, the sulfide-based compound may be, for example, a compound including a metal element belonging to Groups 1 to 14 of the periodic table and having an atomic weight of 10 or more and sulfur. The sulfide-based compound may be, for example, FeS₂, VS₂, NaS, MnS, FeS, NiS, CuS, or any combination thereof. Cycle characteristics of the all solid secondary battery may further be improved, because the cathode active material layer further includes the sulfide-based compound. In one or more embodiments, the cathode active material layer 12 may include the sulfide-based compound in an amount of 10 wt% or less, 5 wt% or less, 3 wt% or less, or 1 wt% or less, based on a total weight, 100 wt%, of the cathode active material layer 12.

The cathode active material may have a particle shape (e.g., in a form of particles), for example, a spherical shape or an elliptically spherical shape. A particle diameter of the cathode active material is not limited and may be within a range applicable to the cathode active material of all solid secondary batteries. Also, an amount of the cathode active material of the cathode 10 is not limited and may be within a range applicable to cathodes of all solid secondary batteries. In one or more embodiments, an amount of the cathode active material included in the cathode active material layer 12 may be, for example, from about 30 wt% to about 99 wt%, from about 30 wt% to about 90 wt%, from about 30 wt% to about 80 wt%, from about 30 wt% to about 70 wt%, or from about 30 wt% to about 50 wt%, based on a total weight, 100 wt%, of the cathode active material layer 12.

### Cathode: Conductive Material

In one or more embodiments, the cathode active material layer 12 may further include a conductive material. The conductive material may be, for example, a carbonaceous conductive material, a metallic conductive material, or any combination thereof. The carbonaceous conductive material may be, for example, graphite, carbon black, acetylene black, Ketjen black, carbon fiber, or any combination thereof, but embodiments of the present disclosure are not limited thereto, and any carbonaceous conductive materials commonly available in the art may also be utilized. The metallic conductive material may be metal powder, metal fiber, or any combination thereof, but embodiments of the present disclosure are not limited thereto, and any metallic conductive materials commonly available in the art may also be utilized. An amount of the conductive material included in the cathode active material layer 12 may be, for example, from 1 wt% to 30 wt%, from 1 wt% to 20 wt%, or from 1 wt% to 10 wt%, based on a total weight, 100 wt%, of the cathode active material layer 12.

### Cathode: Binder

In one or more embodiments, the cathode active material layer 12 may include a binder. The binder may be styrene butadiene rubber (SBR), polytetrafluoroethylene, polyvinylidene fluoride, or polyethylene, but embodiments of the present disclosure are not limited thereto, and any binders commonly available in the art may also be utilized. The cathode active material layer 12 may include the binder in an amount of, for example, 1 wt% to 10 wt% based on a total weight, 100 wt%, of the cathode active material layer 12. In some embodiments, the binder may not be provided.

### Cathode: Other Additives

In one or more embodiments, the cathode active material layer 12 may further include, for example, a filler, a coating agent, a dispersant, and/or an ion-conductive adjuvant, in addition to the cathode active material, the solid electrolyte, the binder, and the conductive material.

The filler, the coating agent, the dispersant, and/or the ion-conductive adjuvant included in the cathode active material layer 12 may be any suitable materials commonly utilized in electrodes of all solid secondary batteries.

### Cathode: Cathode Current Collector

The cathode current collector 11 may be, for example, in the form of a plate or a foil formed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In some embodiments, the cathode current collector 11 may not be provided. The cathode current collector 11 may have a thickness of, for example, about 1 µm to about 100 µm, about 1 µm to about 50 µm, about 5 µm to about 25 µm, or about 10 µm to about 20 µm.

In one or more embodiments, the cathode current collector 11 may include, for example, a base film and a metal layer on one or both (e.g., opposite) sides of the base film. The base film may include, for example, a polymer. The polymer may be, for example, a thermoplastic polymer. The polymer may include, for example, polyethyleneterephthalate (PET), polyethylene (PE), polypropylene (PP), polybutyleneterephthalate (PBT), polyimide (PI), or any combination thereof. The base film may be, for example, an insulator. The base film may soften or liquefy in the event of a short circuit to stop the operation of a battery, thereby inhibiting a rapid increase in currents, because the base film includes an insulating thermoplastic polymer. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or any alloy thereof. The metal layer, acting as an electrochemical fuse, may be cut in the event of an overcurrent to prevent or reduce a short circuit. By controlling a thickness of the metal layer, a limiting current and a maximum current may be adjusted. The metal layer may be plated or deposited on the base film. As the thickness of the metal layer decreases, the limiting current and/or maximum current of the cathode current collector 11 decreases, as a result, the stability of the lithium battery may be improved if (e.g., when) a short circuit occurs. In one or more embodiments, a lead tab may be added onto the metal layer for connection with the outside. The lead tab may be welded to the metal layer or a metal layer/base film stack structure by ultrasonic welding, laser welding, spot welding, and/or the like. While the base film and/or the metal layer melts during welding, the metal layer may be electrically connected to the lead tab. In some embodiments, a metal chip may further be added between the metal layer and the lead tab for stronger welding between the metal layer and the lead tab. The metal chip may be a chip of the same material as the metal of the metal layer. The metal chip may be, for example, a metal foil or a metal mesh. In some embodiments, the metal chip may be, for example, an Al foil, a copper foil, or an SUS foil. By disposing the metal chip on the metal layer and performing welding, the lead tab may be welded to a metal chip/metal layer stack structure or a metal chip/metal layer/base film stack structure. While the base film, the metal layer, and/or the metal chip melt during welding, the metal layer or the metal layer/metal chip stack structure may be electrically connected to the lead tab. A metal chip and/or a lead tab may further be added to a portion of the metal layer. In one or more embodiments, the base film may have a thickness of, for example, about 1 µm to about 50 µm, about 1.5 µm to about 50 µm, about 1.5 µm to about 40 µm, or about 1 µm to about 30 µm. With the thickness of the base film within the above-described ranges, the weight of the electrode assembly may be reduced more effectively. In one or more embodiments, a melting point of the base film may be, for example, from about 100 °C to about 300 °C, from about 100 °C to about 250 °C, or from about 100 °C to about 200 °C. The base film may melt during a process of welding the lead tab to be easily bound to the lead tab, because the base film has a melting point within the above-described ranges. To improve adhesion between the base film and the metal layer, in some embodiments, surface treatment such as corona treatment may be performed on the base film. In one or more embodiments, a thickness of the metal layer may be, for example, from about 0.01 µm to about 3 µm, from about 0.1 µm to about 3 µm, from about 0.1 µm to about 2 µm, or from about 0.1 µm to about 1 µm. With the thickness of the metal layer within the above-described ranges, stability of the electrode assembly may be obtained while maintaining conductivity thereof. In one or more embodiments, a thickness of the metal chip may be, for example, from about 2 µm to about 10 µm, from about 2 µm to about 7 µm, or from about 4 µm to about 6 µm. With the thickness of the metal chip within the above-described ranges, the metal layer may be connected to the lead tab more easily. The weight of the cathode may be reduced because the cathode current collector 11 has the above-described structure, so that energy density of the cathode and the lithium battery may be increased.

### Cathode: Inactive Member

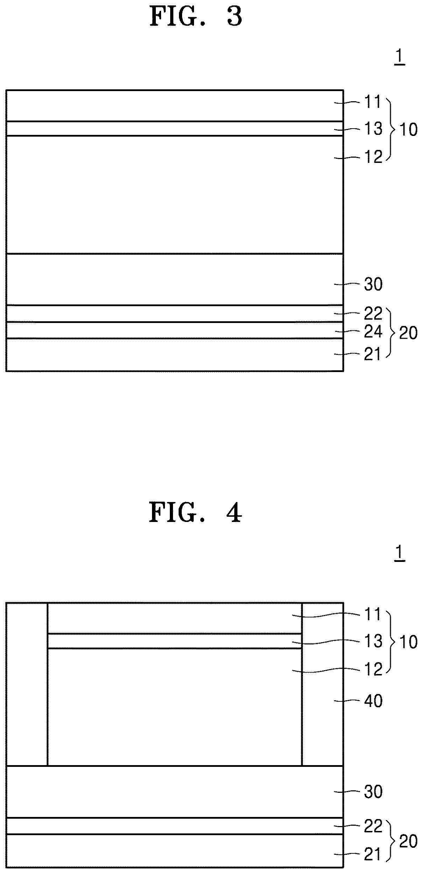

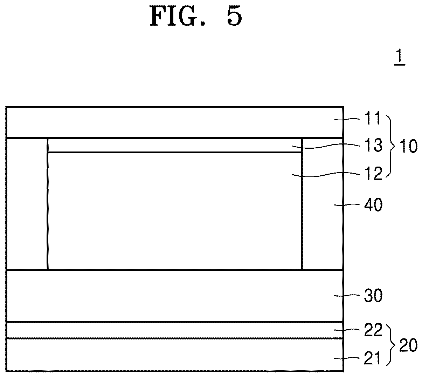

Referring to FIG. 4 and FIG. 5, in one or more embodiments, the cathode 10 may include a cathode current collector 11 and a cathode active material layer 12 on a side (e.g., on one side facing the anode 20) of the cathode current collector 11. An inactive member 40 may be disposed on (e.g., abutting) one side surface of the cathode 10. Referring to FIG. 4, the inactive member 40 may be disposed on (e.g., abutting) one side surface of each of the cathode active material layer 12 and the cathode current collector 11. Referring to FIG. 5, the inactive member 40 may be disposed on (e.g., abutting) one side surface of the cathode active material layer 12 and between the electrolyte layer 30 and the cathode current collector 11 facing the solid electrolyte layer 30. The inactive member 40 may not be disposed on (e.g., may not abut) the side surface of the cathode current collector 11.

Due to the inactive member 40, occurrence of cracks is inhibited in the electrolyte layer 30 during manufacturing and/or charging and discharging of the all solid secondary battery 1, so that cycle characteristics of the all secondary battery 1 may be improved. In an all solid secondary battery 1 not including the inactive member 40, a non-uniform pressure may be applied to the electrolyte layer 30 in contact with the cathode 10 to cause occurrence of cracks in the electrolyte layer 30 during manufacturing and/or charging and discharging of the all solid secondary battery 1, and lithium metal grows thereby to increase the possibility of a short circuit.

In one or more embodiments, in the all solid secondary battery 1, a thickness of the inactive member 40 may be greater than a thickness of the cathode active material layer 12 or the same as the thickness of the cathode active material layer 12. In some embodiments, in the all solid secondary battery 1, the thickness of the inactive member 40 is substantially identical to a thickness of the cathode 10. If (e.g., when) the thickness of the inactive member 40 is identical to that of the cathode 10, a substantially uniform pressure may be applied between the cathode 10 and the electrolyte layer 30, and the cathode 10 may be in sufficiently close contact with the electrolyte layer 30, so that interfacial resistance between the cathode 10 and the electrolyte layer 30 may be reduced. In some embodiments, the electrolyte layer 30 may be sufficiently sintered during a pressing/manufacturing process of the all solid secondary battery 1, and thus internal resistance of the electrolyte layer 30 and the all solid secondary battery 1 including the same may be reduced.

The inactive member 40 may be in contact with the electrolyte layer 30 in a state of around (e.g., surrounding) side surfaces of the cathode 10. The inactive member 40 may be in contact with the electrolyte layer 30 in a state of around (e.g., surrounding) side surfaces of the cathode 10, and thus cracks, which are caused by a pressure difference in the electrolyte layer 30 not in contact with the cathode 10 during a pressing process, may be effectively inhibited. The inactive member 40 around (e.g., surrounding) the side surfaces of the cathode 10 may be separated from the anode 20, for example, from a first anode active material layer 22. The inactive member 40 may be in contact with the electrolyte layer 30 in a state of around (e.g., surrounding) side surfaces of the cathode 10 and is separated from the anode 20. Therefore, the possibility of a short circuit caused by physical contact between the cathode 10 and the first anode active material layer 22 or the possibility of a short circuit caused by overcharging of lithium may be inhibited. For example, if (e.g., when) the inactive member 40 is disposed on one side surface of the cathode active material layer 12 as well as one side surface of the cathode current collector 11, the possibility of a short circuit caused by contact between the cathode current collector 11 and the anode 20 may be inhibited more effectively.

Referring to FIG. 4 and FIG. 5, the inactive member 40 extends from one side surface of the cathode 10 to an end portion of the electrolyte layer 30. By extending the inactive member 40 to the end portion of the electrolyte layer 30, cracks occurring in the end portion of the electrolyte layer 30 may be inhibited. The end portion of the electrolyte layer 30 is the outermost portion in contact with a side surface of the electrolyte layer 30. The inactive member 40 may extend to the outermost portion in contact with the side surface of the electrolyte layer 30. In one or more embodiments, the inactive member 40 may be separated from the anode 20, for example, from the first anode active material layer 22. The inactive member 40 may extend to the end portion of the electrolyte layer 30 but not in contact with the anode 20. The inactive member 40 may fill a space between one side surface of the cathode 10 and the end portion of the electrolyte layer 30.

Referring to FIG. 4 and FIG. 5, in one or more embodiments, a width of the inactive member 40 extending from one side surface of the cathode 10 to the end portion of the electrolyte layer 30 may be, for example, from about 1 % to about 30 %, from about 1 % to about 25 %, from about 1 % to about 20 %, from about 1 % to about 15 %, from about 1 % to about 10 %, or from about 1 % to about 5 %, of a width of the cathode 10 between one side surface and the other side surface facing the one side surface. If (e.g., when) the width of the inactive member 40 is too large, then the energy density of the all solid secondary battery 1 may decrease. If (e.g., when) the width of the inactive member 40 is too small, then the effects of the inactive member 40 may be negligible.

In one or more embodiments, an area (e.g., a surface area of a surface facing the electrolyte layer 30) of the cathode 10 may be smaller than an area (e.g., a surface area of a surface facing the cathode 10) of the electrolyte layer 30 in contact with the cathode 10. The inactive member 40 arranged to surround side surfaces of the cathode 10 may compensate for a difference in area between the cathode 10 and the electrolyte layer 30. The area of the inactive member 40 may compensate for the difference between the area of the cathode 10 and the area of the electrolyte layer 30, and thus cracks of the electrolyte layer 30 caused by a pressure difference during a pressing process may be effectively inhibited. For example, a sum of the area of the cathode 10 and the area of the inactive member 40 may be substantially identical to the area of the electrolyte layer 30. The electrolyte layer 30 may be, for example, a solid electrolyte layer.

In one or more embodiments, the area of the cathode 10 may be, for example, less than 100 %, 99 % or less, 98 % or less, 97 % or less, 96 % or less, or 95 % or less, of the area of the electrolyte layer 30. In some embodiments, the area of the cathode 10 may be, for example, from about 50 % but less than 100 %, from about 50 % to about 99 %, from about 55 % to about 98 %, from about 60 % to about 97 %, from about 70 % to about 96 %, from about 80 % to about 95 %, or from about 85 % to about 95 %, of the area of the electrolyte layer 30.

If (e.g., when) the area of the cathode 10 is identical to or greater than the area of the electrolyte layer 30, the possibility of a short circuit caused by physical contact between the cathode 10 and the first anode active material layer 22 or a short circuit caused by overcharging of lithium may increase. In some embodiments, the area of the cathode 10 may be, for example, identical to the area of the cathode active material layer 12. In some embodiments, the area of the cathode 10 may be, for example, identical to the area of the cathode current collector 11.

In one or more embodiments, the area of the inactive member 40 may be, for example, 50 % or less, 40 % or less, 30 % or less, 20 % or less, or 10 % or less, of the area of the cathode 10. In some embodiments, the area of the inactive member 40 may be, for example, from about 1 % to about 50 %, from about 5 % to about 40 %, from about 5 % to about 30 %, from about 5 % to about 20 %, or from about 5 % to about 15 %, of the area of the cathode 10.

In one or more embodiments, the area S1 of the cathode 10 may be smaller than an area S4 (e.g., a surface area of a surface facing the cathode 10) of an anode current collector 21 included in the anode 20. In some embodiments, the area S1 of the cathode 10 may be, for example, less than 100 %, 99 % or less, 98 % or less, 97 % or less, 96 % or less, or 95 % or less, of the area S4 of the anode current collector 21. In some embodiments, the area S1 of the cathode 10 may be, for example, from 50 % but less than 100 %, from about 50 % to about 99 %, from about 55 % to about 98 %, from about 60 % to about 97 %, from about 70 % to about 96 %, from about 80 % to about 95 %, or from about 85 % to about 95 %, of the area S4 of the anode current collector 21. In some embodiments, the area S4 of the anode current collector 21 may be, for example, identical to an area (e.g., a surface area of a surface facing the cathode 10) of the anode 20. In some embodiments, the area S4 of the anode current collector 21 may be, for example, identical to an area (e.g., a surface area of a surface facing the cathode 10) of the first anode active material layer 22.

As utilized herein, the "identical," "equal," and/or "same" area, length, width, thickness, and/or shape may include all cases having "substantially identical," "substantially equal," and/or "substantially same" area, length, width, thickness, and/or shape except that the area, length, thickness, and/or shape are intentionally modified. The "identical," "equal," and/or "same" area, length, width, and/or thickness may include, for example, a range of unintended differences less than 3 %, less than 2 %, less than 1 %, less than 0.5 %, or less than 0.1 % in the area, length, width, and/or thickness between subjects to be compared.

In one or more embodiments, a thickness of the inactive member 40 may be, for example, greater than a thickness of the first anode active material layer 22. In some embodiments, the thickness of the first anode active material layer 22 may be, for example, 50 % or less, 40 % or less, 30 % or less, 20 % or less, or 10 % or less, of the thickness of the inactive member 40. In some embodiments, the thickness of the first anode active material layer 22 may be from about 1 % to about 50 %, from about 1 % to about 40 %, from about 1 % to about 30 %, from about 1 % to about 20 %, or from about 1 % to about 10 %, of the thickness of the inactive member 40.

In one or more embodiments, the inactive member 40 may be a gasket. By utilizing the gasket as the inactive member 40, cracks occurring in the electrolyte layer 30 by a pressure difference during a pressing process may be more effectively inhibited.

In some embodiments, the inactive member 40 may have, for example, a single-layer structure. In some embodiments, the inactive member 40 may have a multilayer structure. In the inactive member 40 having a multilayer structure, each layer may have a different composition. The inactive member 40 having a multilayer structure may have, for example, a two-layer structure, a three-layer structure, a four-layer structure, or a five-layer structure. In some embodiments, the inactive member 40 having a multilayer structure may include, for example, at least one adhesive layer and at least one support layer. The adhesive layer may effectively prevent or reduce separation of the cathode 10 from the electrolyte layer 30 caused by a volume change of the cathode 10 during a charging and discharging process of the all solid secondary battery 1 and provides binding strength between the support layer and other layers, so as to increase strength of a film of the inactive member 40. The support layer may provide a supporting force to the inactive member 40 to prevent or reduce non-uniform application of a pressure to the electrolyte layer 30 during a pressing process or a charging and discharging process and prevent or reduce deformation of the all solid secondary battery 1.

In one or more embodiments, the inactive member 40 may be, for example, a flame-retardant inactive member. The flame-retardant inactive member may provide flame retardancy, and thus thermal runaway and ignition of the all solid secondary battery 1 may be prevented or reduced. As a result, safety of the all solid secondary battery 1 may further be improved. The flame-retardant inactive member may be to absorb moisture remaining in the all solid secondary battery 1, and thus deterioration of the all solid secondary battery 1 may be prevented or reduced so as to improve lifespan characteristics of the all solid secondary battery 1.

The flame-retardant inactive member may include, for example, a matrix and a filler. The matrix may include, for example, a substrate and a reinforcement. In some embodiments, the matrix may include, for example, a fibrous substrate and a fibrous reinforcement. By including the substrate, the matrix may have elasticity. Therefore, the matrix may effectively accommodate a volume change during charging and discharging of the all solid secondary battery 1 and may be arranged in one or more suitable positions. The substrate included in the matrix may include, for example, a first fibrous material. The substrate may include the first fibrous material, and thus a volume change of the cathode 10 may be effectively accommodated during charging and discharging of the all solid secondary battery 1, and deformation of the inactive member 40 caused by the volume change of the cathode 10 may be inhibited. In one or more embodiments, the first fibrous material may be, for example, a material having an aspect ratio of 5 or more, 20 or more, or 50 or more. In some embodiments, the first fibrous material may be, for example, a material having an aspect ratio of about 5 to about 1000, about 20 to about 1000, or about 50 to about 1000. The first fibrous material may be, for example, an insulating material. A short circuit between the cathode 10 and the anode 20 caused by lithium dendrite and/or the like formed during a charging and discharging process of the all solid secondary battery 1 may be effectively inhibited, because the first fibrous material is an insulating material. The first fibrous material may include, for example, at least one selected from among pulp fibers, insulating polymer fibers, and ion-conductive polymer fibers. Strength of the matrix may be increased, because the matrix includes the reinforcement. Therefore, the matrix may prevent or reduce an excessive volume change during charging and discharging of the all solid secondary battery 1 and prevent or reduce deformation of the all solid secondary battery. In one or more embodiments, the reinforcement included in the matrix may include, for example, a second fibrous material. Strength of the matrix may be increased more uniformly, because the reinforcement includes the second fibrous material. The second fibrous material may be, for example, a material having an aspect ratio or 3 or more, 5 or more, or 10 or more. In some embodiments, the second fibrous material may be, for example, a material having an aspect ratio of about 3 to about 100, about 5 to about 100, or about 10 to about 100. In one or more embodiments, the second fibrous material may be, for example, a flame-retardant material. Ignition caused during a charging and discharging process of the all solid secondary battery 1 or caused by thermal runaway occurring due to an external impact may be effectively prevented or reduced, because the second fibrous material is the flame-retardant material. The second fibrous material may be, for example, at least one selected from among glass fibers, metal oxide fibers, and ceramic fibers.

In one or more embodiments, the flame-retardant inactive member may include a filler in addition to the matrix. The filler may be located inside the matrix, on a surface of the matrix, or both (e.g., simultaneously) inside the matrix and on the surface of the matrix. The filler may be, for example, an inorganic material. In some embodiments, the filler included in the flame-retardant inactive member may be, for example, a moisture getter. The filler may be to absorb moisture, for example, at a temperature below 100 °C to remove moisture remaining in the all solid secondary battery 1, thereby preventing or reducing deterioration of the all solid secondary battery 1. If (e.g., when) a temperature of the all solid secondary battery 1 exceeds 150 °C during a charging and discharging process of the all solid secondary battery 1 or due to thermal runaway caused by an external impact, the filler may release the absorbed moisture, thereby effectively inhibiting ignition of the all solid secondary battery 1. For example, in some embodiments, the filler may be a flame retardant. The filler may be, for example, a metal hydroxide having moisture absorbency. The metal hydroxide included in the filler may be, for example, Mg(OH)₂, Fe(OH)₃, Sb(OH)₃, Sn(OH)₄, TI(OH)₃, Zr(OH)₄, Al(OH)₃, or any combination thereof. An amount of the filler included in the flame-retardant inactive member may be, for example, from about 10 parts by weight to about 80 parts by weight, from about 20 parts by weight to about 80 parts by weight, from about 30 parts by weight to about 80 parts by weight, from about 40 parts by weight to about 80 parts by weight, from about 50 parts by weight to about 80 parts by weight, from about 60 parts by weight to about 80 parts by weight, or from about 65 parts by weight to about 80 parts by, weight based on 100 parts by weight of the flame-retardant inactive member 40.

In one or more embodiments, the flame-retardant inactive member may further include, for example, a binder. The binder may include, for example, a curable polymer or a non-curable polymer. The curable polymer may be a polymer cured by heat and/or pressure. The curable polymer may be, for example, a solid at room temperature. In some embodiments, the flame-retardant inactive member 40 may include, for example, a thermo-pressure curable film and/or a cured product thereof. The thermo-pressure curable polymer may be, for example, TSA-66 manufactured by Toray.

In one or more embodiments, the flame-retardant inactive member may further include another material in addition to the above-described substrate, reinforcement, filler, and binder. The flame-retardant inactive member may further include, for example, at least one selected from among paper, an insulating polymer, an ion-conductive polymer, an insulating inorganic material, an oxide-based solid electrolyte, and a sulfide-based solid electrolyte. The insulating polymer may be, for example, an olefin-based polymer such as polypropylene (PP) and polyethylene (PE).

A density of the substrate or the reinforcement included in the flame-retardant inactive member may be, for example, from about 10 % to about 300 %, from about 10 % to about 150 %, from about 10 % to about 140 %, from about 10 % to about 130 %, or from about 10 % to about 120 %, of a density of a cathode active material included in the cathode active material layer 12.

The inactive member 40 may be a member not including an electrochemically active material, such as an electrode active material. The electrode active material may be a material that allows intercalation/deintercalation of lithium. The inactive member 40 may be formed of any material commonly utilized in the art, other than the electrode active material.

### Anode

### Anode: Anode Active Material

Referring to FIGs. 1 to 5, the anode 20 may include: an anode current collector 21; and a first anode active material layer 22 on (e.g., on a side of) the anode current collector 21.

The first anode active material layer 22 may be, for example, a metal layer, and the metal layer may include lithium or a lithium alloy.

In some embodiments, the first anode active material layer 22 may include, for example, an anode active material and a binder.

The anode active material included in the first anode active material layer 22 may be, for example, a material for anodes allowing formation of an alloy or a compound with lithium.

In one or more embodiments, the anode active material included in the first anode active material layer 22 may be, for example, in the form of particles. The anode active material in the form of particles may have an average particle diameter of, for example, 4 µm or less, 3 µm or less, 2 µm or less, 1 µm or less, 500 nm or less, 300 nm or less, or 100 nm or less. In some embodiments, the anode active material in the form of particles may have an average particle diameter of, for example, about 10 nm to about 4 µm, about 10 nm to about 3 µm, about 10 nm to about 2 µm, about 10 nm to about 1 µm, about 10 nm to about 500 nm, about 10 nm to about 300 nm, or about 10 nm to about 100 nm. With the average particle diameter of the anode active material within the ranges described above, reversible absorbing and/or desorbing of lithium may occur more easily during charging and discharging. The average particle diameter of the anode active material may be, for example, a median diameter D50 measured utilizing a laser particle size analyzer.

The anode active material included in the first anode active material layer 22 may include, for example, at least one selected from among a carbonaceous anode active material and a metal or metalloid anode active material.

In one or more embodiments, the carbonaceous anode active material may include, for example amorphous carbon, crystalline carbon, porous carbon, or any combination thereof.

In some embodiments, the carbonaceous anode active material may be, for example, amorphous carbon. The amorphous carbon may be, for example, carbon black (CB), acetylene black (AB), furnace black (FB), Ketjen black (KB), or graphene, but embodiments of the present disclosure are not limited thereto, and any carbon classified as amorphous carbon in the art may also be utilized. The amorphous carbon may be carbon that does not have crystallinity or has very low crystallinity and is distinguished from crystalline carbon or graphite-based carbon.

In some embodiments, the carbonaceous anode active material may be, for example, porous carbon. A volume of pores in the porous carbon may be, for example, from about 0.1 cc/g to about 10.0 cc/g, from about 0.5 cc/g to about 5 cc/g, or from about 0.1 cc/g to about 1 cc/g. The porous carbon may have an average pore diameter of, for example, about 1 nm to about 50 nm, about 1 nm to about 30 nm, or about 1 nm to about 10 nm. The porous carbon may have a Brunauer-Emmett-Teller (BET) specific surface area of, for example, about 100 m²/g to about 3000 m²/g. Brunauer-Emmett-Teller (BET) surface area analysis is the multi-point measurement of an analyte's specific surface area (m2/g) through gas adsorption analysis, where an inert gas such as nitrogen is continuously flowed over a solid sample, or the solid sample is suspended in a defined gaseous volume.

The metal or metalloid anode active material may include at least one selected from among gold (Au), platinum (Pt), palladium (Pd), silicon (Si), silver (Ag), aluminum (Al), bismuth (Bi), tin (Sn), and zinc (Zn), but embodiments of the present disclosure are not limited thereto, and any suitable metal or metalloid anode active materials capable of forming an alloy or compound with lithium may also be utilized. For example, because nickel (Ni) does not form an alloy with lithium, Ni may not be a metal anode active material.

The first anode active material layer 22 may include one type or kind of the anode active materials or a mixture of a plurality of different anode active materials selected from among these anode active materials. For example, in one or more embodiments, the first anode active material layer 22 may include only amorphous carbon or may include at least one selected from among gold (Au), platinum (Pt), palladium (Pd), silicon (Si), silver (Ag), aluminum (Al), bismuth (Bi), tin (Sn), and zinc (Zn). In some embodiments, the first anode active material layer 22 may include a mixture of amorphous carbon and at least one selected from among gold (Au), platinum (Pt), palladium (Pd), silicon (Si), silver (Ag), aluminum (Al), bismuth (Bi), tin (Sn), and zinc (Zn). A mixing ratio of the amorphous carbon to gold and/or the like in the mixture may be a weight ratio, for example, from about 99:1 to about 1:99, from about 10:1 to about 1:2, from about 5:1 to about 1:1, or from about 4:1 to about 2:1. However, the mixing ratio is not limited thereto but may be selected in accordance with required characteristics of the all solid secondary battery 1. Due to the composition of the anode active material, cycle characteristics of the all solid secondary battery 1 may further be improved.

In one or more embodiments, the anode active material included in the first anode active material layer 22 may include, for example, a mixture of first particles formed of amorphous carbon and second particles formed of a metal or metalloid. The metal or metalloid may include, for example, gold (Au), platinum (Pt), palladium (Pd), silicon (Si), silver (Ag), aluminum (Al), bismuth (Bi), tin (Sn), zinc (Zn), or any combination thereof. In some embodiments, the metalloid may be a semiconductor. An amount of the second particles may be from about 1 to about 99 wt%, from about 1 wt% to about 60 wt%, from about 8 wt% to about 60 wt%, from about 10 wt% to about 50 wt%, from about 15 wt% to about 40 wt%, or from about 20 wt% to about 30 wt%, based on a total weight, 100 wt%, of the mixture. Due to the amount of the second particles within the ranges above, cycle characteristics of the all solid secondary battery 1 may further be improved.

In some embodiments, the first anode active material layer 22 may include a composite anode active material. The composite anode active material may include, for example, a carbonaceous support and a metallic anode active material supported on the carbonaceous support. Localization or agglomeration of the metallic anode active material may be inhibited in the first anode active material layer, and substantially uniform distribution may be obtained, because the composite anode active material has such a structure. As a result, cycle characteristics of the all solid secondary battery 1 including the first anode active material layer 22 may further be improved.

The metallic anode active material supported on the carbonaceous support may include, for example, a metal, a metal oxide, a composite of a metal and a metal oxide, or any combination thereof. The metal may include, for example, gold (Au), platinum (Pt), palladium (Pd), silicon (Si), silver (Ag), aluminum (Al), bismuth (Bi), tin (Sn), tellurium (Te), zinc (Zn), or any combination thereof. The metal oxide may include, for example, a gold (Au) oxide, a platinum (Pt) oxide, a palladium (Pd) oxide, a silicon (Si) oxide, a silver (Ag) oxide, an aluminum (Al) oxide, a bismuth (Bi) oxide, a tin (Sn) oxide, a tellurium (Te) oxide, a zinc (Zn) oxide, or any combination thereof. In some embodiments, the metal oxide may include, for example, AuₓO_{y} (where 0<x≤2 and 0<y≤3), PtₓO_{y} (where 0<x≤1 and 0<y≤2), PdₓO_{y} (where 0<x≤1 and 0<y≤1), SiₓO_{y} (where 0<x≤1 and 0<y≤2), AgₓO_{y} (where 0<x≤2 and 0<y≤1), AlₓO_{y} (where 0<x≤2 and 0<y≤3), BiₓO_{y} (where 0<x≤2 and 0<y≤3), SnₓO_{y} (where 0<x≤1 and 0<y≤2), TeₓO_{y} (where 0<x≤1 and 0<y≤3), ZnₓO_{y} (where 0<x≤1 and 0<y≤1), or any combination thereof. The composite of a metal and a metal oxide may include, for example, a composite of Au and AuₓO_{y} (where 0<x≤2 and 0<y≤3), a composite of Pt and PtₓO_{y} (where 0<x≤1 and 0<y≤2), a composite of Pd and PdₓO_{y} (where 0<x≤1 and 0<y≤1), a composite of Si and SiₓO_{y} (where 0<x≤1 and 0<y≤2), a composite of Ag and AgₓO_{y} (where 0<x≤1 and 0<y≤2), a composite of Al and AlₓO_{y} (where 0<x≤2 and 0<y≤3), a composite of Bi and BiₓO_{y} (where 0<x≤2 and 0<y≤3), a composite of Sn and SnₓO_{y} (where 0<x≤1 and 0<y≤2), a composite of Te and TeₓO_{y} (where 0<x≤1 and 0<y≤3), a composite of Zn and ZnₓO_{y} (where 0<x≤1 and 0<y≤1), or any combination thereof.

The carbonaceous support may be, for example, amorphous carbon. The amorphous carbon may be, for example, carbon black (CB), acetylene black (AB), furnace black (FB), Ketjen black (KB), graphene, activated carbon, carbon nanofiber (CNF), or carbon nanotube (CNT), but embodiments of the present disclosure are not limited thereto, and any carbon classified as amorphous carbon in the art may also be utilized. The amorphous carbon may be carbon that does not have crystallinity or has very low crystallinity and is distinguished from crystalline carbon or graphite-based carbon. The carbonaceous material may be, for example, a carbonaceous anode active material.

The composite anode active material may be, for example, in the form of particles. The composite anode active material in the form of particles may have a particle diameter of, for example, about 10 nm to about 4 µm, about 10 nm to about 1 µm, about 10 nm to about 500 nm, about 10 nm to about 200 nm, or about 10 nm to about 100 nm. Due to the average particle diameter of the composite anode active material within the ranges described above, reversible absorbing and/or desorbing of lithium may occur more easily during charging and discharging. The metallic anode active material supported on the support may be, for example, in the form of particles. The metallic anode active material may have a particle diameter of, for example, about 1 nm to about 200 nm, about 1 nm to about 150 nm, about 5 nm to about 100 nm, or about 10 nm to about 50 nm. The carbonaceous support may be, for example, in the form of particles. The carbonaceous support may have a particle diameter of, for example, about 10 nm to about 2 µm, about 10 nm to about 1 µm, about 10 nm to about 500 nm, about 10 nm to about 200 nm, or about 10 nm to about 100 nm. As the carbonaceous support has the particle diameter within the ranges described above, the carbonaceous support may be more uniformly arranged in the first anode active material layer. In some embodiments, the carbonaceous support may be, for example, nanoparticles having a particle diameter of 500 nm or less. The particle diameter of the composite anode active material, the particle diameter of the metallic anode active material, and the particle diameter of the carbonaceous support may each be, for example, an average particle diameter. The average particle diameter may be, for example, a median diameter D50 measured utilizing a laser particle size analyzer. In some embodiments, the average particle diameter may be determined, for example, automatically utilizing software or manually based on manual computation, from an electron microscope image.

### Anode: Binder

The binder included in the first anode active material layer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, or any combination thereof, but embodiments of the present disclosure are not limited thereto, and any binders commonly available in the art may also be utilized. The binder may be utilized alone or as a combination of a plurality of different binders.

If (e.g., when) the first anode active material layer 22 includes the binder, the first anode active material layer 22 may be stabilized on the anode current collector 21. Cracks may be inhibited in the first anode active material layer 22 during a charging and discharging process, although a volume and/or a relative position of the first anode active material layer 22 changes. For example, if (e.g., when) the first anode active material layer 22 does not include a binder, the first anode active material layer 22 may easily be separated from the anode current collector 21. If (e.g., when) the first anode active material layer 22 is separated from the anode current collector 21, an exposed region of the anode current collector 21 may be brought into contact with the electrolyte layer 30, thereby increasing the possibility of occurrence of a short circuit. In one or more embodiments, the first anode active material layer 22 may be prepared by, for example, applying a slurry, in which materials constituting the first anode active material layer 22 are dispersed, to the anode current collector 21, and drying the slurry. By adding the binder to the first anode active material layer 22, the anode active material may be stably dispersed in the slurry. For example, if (e.g., when) the slurry is applied to the anode current collector 21 by screen printing, it may be possible to suppress or reduce clogging of a screen (e.g., clogging by agglomerates of the anode active material).

### Anode: Other Additives

In one or more embodiments, the first anode active material layer 22 may further include additives utilized in all solid secondary batteries, such as a filler, a coating agent, a dispersant, and/or an ion-conductive adjuvant.

### Anode: Solid Electrolyte

In one or more embodiments, the first anode active material layer 22 may further include a solid electrolyte. The solid electrolyte may be selected from among the solid electrolytes included in the electrolyte layer 30. The solid electrolyte included in the first anode active material layer 22 may serve as a reaction site where formation of lithium metal is initiated in the first anode active material layer 22, as a space for storing the formed lithium metal, or as a path for delivering lithium ions. In some embodiments, the solid electrolyte may not be provided.

In the first anode active material layer 22, for example, an amount of the solid electrolyte may be higher in a region adjacent to the electrolyte layer 30 and may be lower in a region adjacent to the anode current collector 21. In some embodiments, in the first anode active material layer 22, the solid electrolyte may have, for example, a concentration gradient such that the concentration decreases from a region adjacent to the electrolyte layer 30 to a region adjacent to the anode current collector 21.

### Anode: First Anode Active Material Layer

In one or more embodiments, a ratio B/A of an initial charging capacity B of the first anode active material layer 22 to an initial charging capacity A of the cathode active material layer may be from about 0.005 to about 0.45. The initial charging capacity of the cathode active material layer 12 may be determined at a maximum charging voltage relative Li/Li⁺ charged from a 1^{st} open circuit voltage. The initial charging capacity of the first anode active material layer 22 may be determined at 0.01 V relative to Li/Li⁺ discharged from a 2^{nd} open circuit voltage.

The maximum charging voltage may be determined by a type or kind of the cathode active material. The maximum charging voltage may be, for example, 1.5 V, 2.0 V, 2.5 V, 3.0 V, 3.5 V, 4.0 V, 4.2 V, or 4.3 V. For example, in some embodiments, a maximum charging voltage of the Li₂S or Li₂S-containing composite may be 2.5 V relative to Li/Li⁺. For example, in some embodiments, a maximum charging voltage of the Li₂S or Li₂S-containing composite may be 3.0 V relative to Li/Li⁺. In one or more embodiments, the ratio B/A of the initial charging capacity B of the first anode active material layer 22 to the initial charging capacity A of the cathode active material layer may be, for example, from about 0.01 to about 0.3, from about 0.01 to about 0.2, or from about 0.05 to about 0.1. The initial charging capacity (mAh) of the cathode active material layer 12 may be obtained by multiplying a charge specific capacity (mAh/g) of the cathode active material by a mass (g) of the cathode active material in the cathode active material layer 12. If (e.g., when) one or more suitable types (kinds) of cathode active materials are utilized, then charge specific capacityxmass value for each of the cathode active materials may be calculated separately, and a sum of these values is regarded as an initial charging capacity of the cathode active material layer 12. The initial charging capacity of the first anode active material layer 22 may be calculated in substantially the same manner. The initial charging capacity of the first anode active material layer 22 may be obtained by multiplying a charge specific capacity (mAh/g) of the anode active material by a mass of the anode active material of the first anode active material layer 22. If (e.g., when) one or more suitable types (kinds) of anode active materials are utilized, then charge specific capacity×mass value for each of the anode active materials may be calculated separately, and a sum of these values is regarded as the initial charging capacity of the first anode active material layer 22. The charge specific capacity of each of the cathode active material and the anode active material may be measured by utilizing solid half-cells to which lithium metal is utilized as a counter electrode. The initial charging capacities of the cathode active material layer 12 and the first anode active material layer 22 may each be directly measured respectively at a constant current density, e.g., 0.1 mA/cm², by utilizing a solid half-cell. The measurement may be performed on the cathode with an operating voltage from the 1^{st} open circuit voltage (OCV) to the maximum charging voltage, e.g., 3.0 V (vs. Li/Li⁺). The measurement may be performed on the anode, e.g., lithium metal, with an operating voltage from the 2^{nd} open circuit voltage (OCV) to 0.01 V. For example, an solid half-cell including the cathode active material layer may be charged at a constant current of 0.1 mA/cm² from the 1^{st} open circuit voltage to 3.0 V, and the solid half-cell including the first anode active material layer may be discharged at a constant current of 0.1 mA/cm² from the 2^{nd} open circuit voltage to 0.01 V. In some embodiments, a current density during the charging at the constant current may be, for example, 0.2 mA/cm² or 0.5 mA/cm². In some embodiments, a solid half-cell including the cathode active material layer may be charged, for example, from the 1^{st} open circuit voltage to 2.5 V, 2.0 V, 3.5 V, or 4.0 V. The maximum charging voltage of the cathode active material may be determined by a maximum voltage of a battery satisfying safety conditions according to JISC8712:2015 of the Japanese Standards Association.

If (e.g., when) the first anode active material layer 22 has a too low initial charging capacity, then the thickness of the first anode active material layer 22 may become too small, and thus lithium dendrite formed between the first anode active material layer 22 and the anode current collector 21 during repeated charging and discharging processes may break the first anode active material layer 22, making it difficult to improve cycle characteristics of the all solid secondary battery 1. If (e.g., when) the first anode active material layer 22 has a too high charging capacity, then the energy density of the all solid secondary battery 1 may decrease, and thus the internal resistance of the all solid secondary battery 1 may be increased by the first anode active material layer 22, making it difficult to improve cycle characteristics of the all solid secondary battery 1.

In one or more embodiments, a thickness of the first anode active material layer 22 may be, for example, 50 % or less, 40 % or less, 30 % or less, 20 % or less, 10 % or less, or 5 % or less, of a thickness of the cathode active material layer 12. In some embodiments, the thickness of the first anode active material layer 22 may be, for example, from about 1 % to about 50 %, from about 1 % to about 40 %, from about 1 % to about 30 %, from about 1 % to about 20 %, from about 1 % to about 10 %, or from about 1 % to about 5 %, of the thickness of the cathode active material layer 12. In one or more embodiments, the thickness of the first anode active material layer 22 may be, for example, from about 1 µm to about 20 µm, from about 2 µm to about 15 µm, or from about 3 µm to about 10 µm. If (e.g., when) the first anode active material layer 22 has a too small thickness, then lithium dendrite formed between the first anode active material layer 22 and the anode current collector 21 may break the first anode active material layer 22, making it difficult to improve cycle characteristics of the all solid secondary battery 1. If (e.g., when) the first anode active material layer 22 has a too large thickness, then the energy density of the all solid secondary battery 1 may decrease and the internal resistance of the all solid secondary battery 1 may increase by the first anode active material layer 22, making it difficult to improve cycle characteristics of the all solid secondary battery 1. As the thickness of the first anode active material layer 22 decreases, an initial charging capacity of the first anode active material layer 22 may also decrease.

### Anode: Second Anode Active Material Layer

Referring to FIG. 3, in one or more embodiments, the all solid secondary battery 1 may further include, for example, a second anode active material layer 24 between the anode current collector 21 and the first anode active material layer 22 after charging. The second anode active material layer 24 may be a metal layer including lithium or a lithium alloy. The metal layer may include lithium or a lithium alloy. As such, the second anode active material layer 24, as a metal layer including lithium, may serve as a reservoir of lithium. The lithium alloy may be, for example, an Li-AI alloy, an Li-Sn alloy, an Li-In alloy, an Li-Ag alloy, an Li-Au alloy, an Li-Zn alloy, an Li-Ge alloy, or an Li-Si alloy, but embodiments of the present disclosure are not limited thereto, and any lithium alloy commonly available in the art may also be utilized. The second anode active material layer 24 may be formed of one of the lithium alloys alone, lithium, or a combination of one or more suitable types (kinds) of lithium alloys. In some embodiments, the second anode active material layer 24 may be, for example, a plated layer. For example, the second anode active material layer 24 may be plated between the first anode active material layer 22 and the anode current collector 21 during a charging and discharging process of the all solid secondary battery 1.

A thickness of the second anode active material layer 24 is not limited, but may be, for example, from about 1 µm to about 500 µm, from about 1 µm to about 200 µm, from about 1 µm to about 150 µm, from about 1 µm to about 100 µm, or from about 1 µm to about 50 µm. If (e.g., when) the thickness of the second anode active material layer 24 is too small, then the function of the second anode active material layer 24 as a reservoir of lithium may be difficult to obtain. If (e.g., when) the thickness of the second anode active material layer 24 is too large, then the mass and volume of the all solid secondary battery 1 may increase, and thus cycle characteristics of the all solid secondary battery 1 may deteriorate.

In some embodiments, in the all solid secondary battery 1, the second anode active material layer 24 may be disposed between the anode current collector 21 and the first anode active material layer 22 before assembling the all solid secondary battery 1. If (e.g., when) the second anode active material layer 24 is disposed between the anode current collector 21 and the first anode active material layer 22 before assembling the all solid secondary battery 1, then the second anode active material layer 24, as a metal layer including lithium, may serve as a reservoir of lithium. For example, in some embodiments, before assembling the all solid secondary battery 1, a lithium foil may be disposed between the anode current collector 21 and the first anode active material layer 22.

If (e.g., when) the second anode active material layer 24 is plated during charging after assembling the all solid secondary battery 1, then the energy density of the all solid secondary battery 1 may increase because the second anode active material layer 24 is not included while the all solid secondary battery 1 is assembled. While the all solid secondary battery 1 is charged, charging may be performed to exceed the charging capacity of the first anode active material layer 22. For example, the first anode active material layer 22 may be overcharged. During initial charging, lithium may be absorbed to the first anode active material layer 22. The anode active material included in the first anode active material layer 22 may form an alloy or a compound with lithium ions that have migrated from the cathode 10. If (e.g., when) the first anode active material layer 22 is overcharged to exceed the capacity thereof, lithium may be plated on a rear surface of the first anode active material layer 22, i.e., between the anode current collector 21 and the first anode active material layer 22, and a metal layer corresponding to the second anode active material layer 24 may be formed by the plated lithium. The second anode active material layer 24 may be a metal layer mainly composed of lithium (i.e., lithium metal). These results may be obtained because the anode active material included in the first anode active material layer 22 includes a material forming an alloy or a compound with lithium. During discharging, lithium of the first anode active material layer 22 and the second anode active material layer 24, i.e., the metal layer, may be ionized to migrate in a direction toward the cathode 10. Therefore, it may utilize lithium as an anode active material in the all solid secondary battery 1. The first anode active material layer 22 may serve as a protective layer for the second anode active material layer 24, i.e., the metal layer, to prevent or reduce formation and growth of lithium dendrite because the second anode active material layer 24 is coated with the first anode active material layer 22. Therefore, a short circuit and capacity reduction may be inhibited in the all solid secondary battery 1, and thus cycle characteristics of the all solid secondary battery 1 may be improved. If (e.g., when) the second anode active material layer 24 is disposed by charging after assembling the all solid secondary battery 1, the anode 20, i.e., the anode current collector 21, the first anode active material layer 22, and a region therebetween, may be a Li-free region not including lithium (Li) in an early state of charging or after completely discharging the all solid secondary battery 1.

### Anode: Anode Current Collector

The anode current collector 21 may be formed of, for example, a material that does not react with lithium, i.e., a material that does not form an alloy or a compound with lithium. The material constituting the anode current collector 21 may be, for example, copper (Cu), stainless steel, titanium (Ti), iron (Fe), cobalt (Co), or nickel (Ni), but embodiments of the present disclosure are not limited thereto, and any materials commonly available in the art as electrode current collectors may also be utilized. The anode current collector 21 may be formed of one metal selected from those described above or an alloy or coated material of two or more metals. The anode current collector 21 may be, for example, in the form of a plate or foil.

Referring to FIG. 2, in one or more embodiments, the all solid secondary battery 1 may further include a thin film 23 containing an element capable of forming an alloy with lithium on one surface (side) of the anode current collector 21. The thin film 23 may be disposed between the anode current collector 21 and the first anode active material layer 22. The thin film 23 may include, for example, an element capable of forming an alloy with lithium. Non-limiting examples of the element capable of forming an alloy with lithium may include gold, silver, zinc, tin, indium, silicon, aluminum, and bismuth, but embodiments of the present disclosure are not limited thereto, and any elements capable of forming an alloy with lithium well suitable in the art may also be utilized. The thin film 23 may be formed of any one of the aforementioned metals or an alloy of one or more suitable types (kinds) of metals. By disposing the thin film 23 on one surface of the anode current collector 21, the second anode active material layer 24 plated between the thin film 23 and the first anode active material layer 22 may become flatter, thereby further improving cycle characteristics of the all solid secondary battery 1.

For example, in one or more embodiments, the thin film 23 may have a thickness of about 1 nm to about 800 nm, about 10 nm to about 700 nm, about 50 nm to about 600 nm, or about 100 nm to about 500 nm. If (e.g., when) the thickness of the thin film 23 is less than 1 nm, then the function of the thin film 23 may be difficult to obtain. If (e.g., when) the thickness of the thin film 23 is too large, then the thin film 23 absorbs lithium and an amount of plated lithium in the anode may decrease, and thus the energy density of the all solid secondary battery 1 may decrease and cycle characteristics of the all solid secondary battery 1 may deteriorate. The thin film 23 may be formed on the anode current collector 21 by, for example, vacuum deposition, sputtering, and/or plating. However, the method is not limited thereto and any method commonly utilized in the art to form a thin film 23 may also be utilized.

In one or more embodiments, the anode current collector 21 may include, for example, a base film and a metal layer disposed on one or both (e.g., opposite) sides of the base film. The base film may include, for example, a polymer. The polymer may be, for example, a thermoplastic polymer. The polymer may include, for example, polyethyleneterephthalate (PET), polyethylene (PE), polypropylene (PP), polybutyleneterephthalate (PBT), polyimide (PI), or any combination thereof. The polymer may be an insulating polymer. The base film may soften or liquefy in the event of a short circuit to stop the operation of a battery, thereby inhibiting a rapid increase in currents, because the base film includes an insulating thermoplastic polymer. The metal layer may include, for example, copper (Cu), stainless steel, titanium (Ti), iron (Fe), cobalt (Co), nickel (Ni), or an alloy thereof. In some embodiments, the anode current collector 21 may further include a metal chip and/or a lead tab. For detailed descriptions of the base film, the metal layer, the metal chip, and the lead tab of the anode current collector 21, reference may refer to the above-described cathode current collector 11. The weight of the anode may be reduced, because the anode current collector 21 has the above-described structure, so that the energy density of the anode and the lithium battery may be increased.

### Solid Electrolyte Layer

### Solid Electrolyte Layer: Electrolyte

Referring to FIGs. 1 to 5, the solid electrolyte layer 30 may be between the cathode 10 and the anode 20 and may include a solid electrolyte separator. The solid electrolyte layer 30 may include, for example, a solid electrolyte, a gel electrolyte, or any combination thereof.

In one or more embodiments, the solid electrolyte additionally included in the solid electrolyte layer 30 may include, for example, an oxide-based solid electrolyte, a polymer solid electrolyte, or any combination thereof.

The oxide-based solid electrolyte may be, for example, Li_{1+x+y}AlₓTi₂₋ₓSi_{y}P_{3-y}O₁₂ (where 0<x<2 and 0≤y<3), BaTiO₃, Pb(Zr,Ti)O₃ (PZT), Pb₁₋ₓLaₓZr_{1-y}Ti_{y}O₃ (PLZT, where 0≤x<1 and 0≤y<1), Pb(Mg₃Nb_{2/3})O₃-PbTiO₃ (PMN-PT), HfO₂, SrTiOs, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (where 0<x<2 and 0<y<3), LiₓAl_{y}Ti_{z}(PO₄)₃ (where 0<x<2, 0<y<1, and 0<z<3), Li_{1+x+y}(Al, Ga)ₓ(Ti, Ge)₂₋ₓSi_{y}P_{3-y}O₁₂ (where 0≤x≤1 and 0≤y≤1 ), LiₓLa_{y}TiO₃ (where 0<x<2 and 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂ (where M = Te, Nb, or Zr, and 0≤x≤10), or any combination thereof. The oxide-based solid electrolyte may be manufactured, for example, by a sintering method, and/or the like.

For example, in some embodiments, the oxide-based solid electrolyte may be, for example, a garnet-type or kind solid electrolyte selected from among Li₇La₃Zr₂O₁₂ (LLZO) and Li₃₊ₓLa₃Zr₂₋ₐMₐO₁₂ (M doped LLZO, where M=Ga, W, Nb, Ta, or Al, 0<a<2, and 0≤x≤10).

The polymer solid electrolyte may include, for example, a mixture of a lithium salt and a polymer or a polymer having ion-conductive functional group. The polymer solid electrolyte may be, for example, a polymer electrolyte in a solid state at 25 °C and 1 atm. The polymer solid electrolyte may not include (e.g., may exclude) a liquid. The polymer solid electrolyte includes a polymer. The polymer may be, for example, polyethylene oxide (PEO), polyvinylidene fluoride (PVDF), polyvinylidene fluoride-hexafluoropropylene (PVDF-HFP), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA) , polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi⁺), or any combination thereof, but embodiments of the present disclosure are not limited thereto, and any compounds commonly utilized in the art as polymer electrolytes may be utilized. The lithium salt may also be any lithium salt commonly utilized in the art. For example, the lithium salt may be LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (where x and y are each an integer of 1 to 20), LiCl, Lil, or any mixture thereof. The polymer included in the polymer solid electrolyte may be, for example, a compound including 10 or more, 20 or more, 50 or more, or 100 or more repeating units. The polymer included in the polymer solid electrolyte may have a weight average molecular weight of, for example, 1000 Dalton (Da) or more, 10,000 Da or more, 100,000 Da or more, or 1,000,000 Da or more.

The gel electrolyte may be, for example, a polymer gel electrolyte. The gel electrolyte may have a gel state without including a polymer.

In one or more embodiments, the polymer gel electrolyte may include, for example, a liquid electrolyte and a polymer, or an organic solvent and a polymer having an ion-conductive functional group. The polymer gel electrolyte may be, for example, a polymer electrolyte in a gel state at 25 °C and 1 atm. In some embodiments, the polymer gel electrolyte may have, for example, a gel state without including a liquid. The liquid electrolyte utilized in the polymer gel electrolyte may be, for example, a mixture of an ionic liquid, a lithium salt, and an organic solvent; a mixture of a lithium salt and an organic solvent; or a mixture of an ionic liquid and an organic solvent. The polymer utilized in the polymer gel electrolyte may be selected from polymers utilized in the polymer solid electrolyte. The organic solvent may be selected from organic solvents utilized in liquid electrolytes. The lithium salt may be selected from lithium salts utilized in polymer solid electrolytes. The ionic liquid may refer to a salt in a liquid state, or a molten salt at room temperature composed solely of ions and having a melting point below room temperature. The ionic liquid may include, for example, at least one compound including a) at least one cation selected from among ammonium, pyrrolidinium, pyridinium, pyrimidinium, imidazolium, piperidinium, pyrazolium, oxazolium, pyridazinium, phosphonium, sulfonium, triazolium, and any mixture thereof, and b) at least one anion selected from among BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, SO₄²⁻, CF₃SO₃⁻, (FSO₂) ₂N⁻, (C₂F₂SO₂)₂N⁻, (C₂F₂SO₂)(CF₂SO₂)N⁻, and (CF₂SO₂)₂N⁻. In some embodiments, the polymer solid electrolyte may be impregnated with a liquid electrolyte in a secondary battery to form a polymer gel electrolyte. In some embodiments, the polymer gel electrolyte may further include inorganic particles. The polymer included in the polymer gel electrolyte may be, for example, a compound including 10 or more, 20 or more, 50 or more, or 100 or more repeating units. The polymer included in the polymer gel electrolyte may have a weight average molecular weight of, for example, 500 Da or more, 1000 Da or more, 10,000 Da or more, 100,000 Da or more, or 1,000,000 Da or more .

### Method of Manufacturing Cathode

A method of manufacturing a cathode according to one or more embodiments may include: providing an adhesion binder layer on a cathode current collector; providing a Li₂S-containing composite; providing a sulfide-based solid electrolyte; mixing the Li₂S-containing composite with the sulfide-based solid electrolyte to prepare a mixture; and adding a cohesion binder to the mixture, mixing the mixture, providing the mixture onto the adhesion binder layer to form a cathode active material layer.

A composite of Li₂S and a lithium salt as the Li₂S-containing composite may be prepared by mechanically milling Li₂S and the lithium salt. Milling conditions are not limited, and any conditions allowing formation of the composite may be possible. In one or more embodiments, the composite of Li₂S and the lithium salt was prepared by adding Li₂S particles and the lithium salt to a ball mill and stirring the mixture at a rate of about 100 rpm to about 1000 rpm for about 1 hour to about 20 hours. The stirring may be performed once or more.

The lithium salt may be, for example, Lil, LiBr, LiCI, LiF, LiH, Li₂O, Li₂Se, Li₂Te, Li₃N, LisP, Li₃As, Li₃Sb, Li₃Al₂, LiB₃, Li₃OCl, LiPF₆, LiBF₄, LiSbF₆, LiAsF₆, LiClO₄, LiAlO₂, LiAlCl₄, LiNOs, Li₂CO₃, LiBH₄, Li₂SO₄, LisBOs, Li₃PO₄, Li₄NCl, Li₅NCl₂, Li₃BN₂, or any combination thereof.

A composite of Li₂S, a lithium salt, and a carbonaceous material as the Li₂S-containing composite may be prepared, for example, by mechanically milling Li₂S and the lithium salt; and adding a carbonaceous material to the milled product, followed by milling.

A sulfide-based solid electrolyte may be provided. The sulfide-based solid electrolyte may be as described above in the solid electrolyte layer/separator.

The Li₂S-containing composite may be mixed with the sulfide-based solid electrolyte to prepare a mixture. A mixing ratio of the Li₂S-containing composite to the sulfide-based solid electrolyte may be, for example, from about 50:50 to about 95:5, from about 50:50 to about 90:10, from about 50:50 to about 80:20, or from about 50:50 to about 70:30 in a weight ratio.

In some embodiments, the mixture may include a processing solvent. By additionally including the processing solvent, the mixture may have a slurry form. The solvent may be, for example, octyl acetate, but embodiments of the present disclosure are not limited thereto, and any solvent commonly available in the art may also be utilized. In some embodiments, the mixture may be prepared by a dry method without including any processing solvent.

A solid electrolyte is prepared.

The adhesion binder layer may be formed by utilizing a composition for forming an adhesion binder layer including an adhesion binder.

A method of forming the adhesion binder layer including polydopamine as the adhesion binder will be described herein.

According to some embodiments, a composition for forming a polydopamine layer including dopamine, a solvent, and a buffer solution may be prepared.

The dopamine may be self-polymerized at a pH of about 8 to about 8.8, e.g., about 8.5, to form polydopamine.

The composition for forming a polydopamine layer may have a pH of about 8.0 to about 8.8, e.g., a pH of 8.5.

As the buffer solution, a buffer solution having a pH of about 8 to about 8.8, e.g., a buffer solution including tris(hydroxymethyl)aminomethane hydrochloride (Tris-HCl) and water (wherein a volume ratio of HCl to H₂O is 3:1), trisborate ethylene diamine tetra-acetic acid (TBE), tris-buffered saline (TBS), and phosphate-buffered saline (PBS), or any combination thereof may be utilized.

As the solvent, a material not affecting the pH of the composition, such as an alcohol-based compound may be utilized. Non-limiting examples of the alcohol-based compound may include ethanol, methanol, butanol, and isopropanol. An amount of the solvent may be from about 100 parts by weight to about 3000 parts by weight based on 100 parts by weight of dopamine.

A drying may be performed, for example, at a temperature range of about 20 °C to about 25 °C.

A coating may be performed by dipping, spray coating, bar coating, die casting, comma coating, screen printing, and/or the like. In some embodiments, the adhesion binder layer may also be formed on a separate substrate and then bonded to the cathode by pressing or lamination. The coating according to some embodiments may refer to spray coating.

According to some embodiments, an adhesion binder-containing composition may be prepared by dissolving a dopamine monomer, as a polydopamine precursor, in an acid such as HCl. The cathode current collector may be immersed in the composition. Subsequently, the cathode current collector coated with the composition may be washed and dried to arrange an adhesion binder layer.

According to some embodiments, a polydopamine coating layer-forming composition may be prepared by dispersing polydopamine in a distilled water buffer solution. The composition may be applied onto the cathode current collector and dried to form a polydopamine coating layer to arrange an intermediate layer on the surface of the cathode current collector. The coating may be performed by dipping, spray coating, bar coating, die casting, comma coating, screen printing, and/or the like.

The drying may be performed, for example, at a temperature of about 30 °C to about 90 °C, e.g., at 80 °C.

Hereinafter, one or more example embodiments of the present disclosure will be described in more detail with reference to the following examples and comparative examples. However, these examples are not intended to limit the purpose and scope of the one or more example embodiments.

### Preparation of Composite of Li₂S and Lithium Salt

### Preparation Example 1: LizS-Lil Composite

Li₂S and LiI were mixed in a weight ratio 30:20. The mixture was mechanically milled by utilizing a ball mill to prepare a Li₂S-Lil composite. Milling conditions were 25 °C, 600 rpm, and 10 hours.

A particle size of the Li₂S-Lil composite was less than 1 µm. The particle size of the Li₂S-LiI composite was calculated by software from an SEM image of powder of the Li₂S-Lil composite. The particle size of the Li₂S-Lil composite was a D50 average particle diameter.

Li₂S had a Mohs hardness of 0.6, and LiI had a Mohs hardness of 2.0. The Mohs hardness of the Li₂S-Lil composite was less than 2.

### Preparation Example 2: Li₂S-LiBr Composite

A Li₂S-LiBr composite was prepared in substantially the same manner as in Preparation Example 1, except that LiBr was utilized instead of Lil.

### Preparation Example 3: Li₂S-LiCl Composite

A Li₂S-LiCl composite was prepared in substantially the same manner as in Preparation Example 1, except that LiCI was utilized instead of Lil.

### Comparative Preparation Example 1: Li₂S-LiI-Simple Mixture

A mixture of Li₂S and LiI in a weight of 30:20 was utilized as it is.

### Preparation of Li₂S-LiI-CNF Cathode Active Material

### Preparation Example 4: Li₂S-LiI-CNF (50:30:20), Two Stages, 10 hr, 600 rpm, 28 G First Process

Li₂S and LiI were mixed in a weight ratio 50:30. The mixture was mechanically milled by utilizing a ball mill to prepare a Li₂S-Lil composite. Milling conditions were 25 °C, 600 rpm, and 10 hours. A milling energy applied to a sample during milling was 28 G.

### Second Process

The Li₂S-Lil composite and carbon nanofibers (CNFs) were mixed in a weight ratio of 80:20. The mixture was mechanically milled by utilizing a ball mill to prepare a Li₂S-LiI-CNF composite. Milling conditions were 25 °C, 600 rpm, and 10 hours. A milling energy applied to a sample during milling was 28 G. The Li₂S-LiI-CNF composite was utilized as a composite cathode active material.

### Preparation Example 5: Li₂S-LiI-CNF, Two Stages, 8 hr, 600 rpm, 28 G

A **Li₂S-LiI-CNF** composite was prepared in substantially the same manner as in Preparation Example 4, except that the milling time was modified to 8 hours in each of the first and second processes.

### Preparation Example 6: Li₂S-LiI-CNF, Two Stages, 6 hr, 600 rpm, 28 G

A Li₂S-LiI-CNF composite was prepared in substantially the same manner as in Preparation Example 4, except that the milling time was modified to 6 hours in each of the first and second processes.

### Preparation Example 7: Li₂S-LiI-CNF, Two Stages, 4 hr, 600 rpm, 28 G

A Li₂S-LiI-CNF composite was prepared in substantially the same manner as in Preparation Example 4, except that the milling time was modified to 4 hours in each of the first and second processes.

### Comparative Preparation Example 2: Simple Mixture of Li₂S, Lil, and CNF

A mixture of Li₂S, Lil, and CNF in a weight ratio of 50:30:20 was utilized as it is.

### Comparative Preparation Example 3: LizS-Lil-CNF, Two Stages, 1 hr, 600 rpm, 28 G

A Li₂S-LiI-CNF composite was prepared in substantially the same manner as in Preparation Example 4, except that the milling time was modified to 1 hour in each of the first and second processes.

### Comparative Preparation Example 4: Li₂S-LiI-CNF, Two Stages, 20 hr, 600 rpm, 28 G

A Li₂S-LiI-CNF composite was prepared in substantially the same manner as in Preparation Example 4, except that the milling time was modified to 20 hours in each of the first and second processes.

### Comparative Preparation Example 5: LizS-Lil-CNF, 510 rpm, 10 hr, Two Stages, 20 G (KR 2017-0068448 (Tatsumisago))

### First Process

Li₂S and LiI were mixed in a weight ratio 30:20 to prepare a first mixture. The first mixture was mechanically milled by utilizing a ball mill to prepare a Li₂S-Lil composite.

Milling conditions were 25 °C, 510 rpm, and 10 hours. A milling energy applied to a sample during milling was 20 G.

### Second Process

The Li₂S-LiI composite and carbon nanofibers (CNFs) were mixed in a weight ratio of 50:10 to prepare a second mixture. The second mixture was mechanically milled by utilizing a ball mill to prepare a Li₂S-LiI-CNF composite.

Milling conditions were 25 °C, 510 rpm, and 10 hours. A milling energy applied to a sample during milling was 20 G. The Li₂S-LiI-CNF composite was utilized as a composite cathode active material.

### Comparative Preparation Example 6: LizS-Lil-CNF, 10 hr, Two Stages, 10 G

A Li₂S-LiI-CNF composite was prepared in substantially the same manner as in Preparation Example 4, except that the milling energy was modified to 10 G by reducing a rotational speed in each of the first and second processes.

### Comparative Preparation Example 7: Li₂S-LiI-CNF, 10 hr, Two Stages, 30 G

A Li₂S-LiI-CNF composite was prepared in substantially the same manner as in Preparation Example 4, except that the milling energy was modified to 30 G by increasing the rotational speed in each of the first and second processes.

### Comparative Preparation Example 8: Simple Mixture of Li₂S and CNF

Li₂S and carbon nanofibers (CNFs) were mixed in a weight ratio of 30:30. The mixture was utilized as a cathode active material as it is.

### Comparative Preparation Example 9: Li₂S-CNF, 600 rpm, 2 hr, One Stage, 20 G

Li₂S and carbon nanofibers (CNFs) were mixed in a weight ratio of 30:30. The mixture was mechanically milled by utilizing a ball mill to prepare a Li₂S-CNF composite. Milling conditions were 25 °C, 600 rpm, and 2 hours. A milling energy applied to a sample during milling was 20 G. The Li₂S-CNF composite was utilized as a composite cathode active material.

### Comparative Preparation Example 10: Li₂S-CNF, 600 rpm, 10 hr, One Stage, 20 G

A Li₂S-CNF composite was prepared in substantially the same manner as in Comparative Preparation Example 9, except that the milling time was modified to 10 hours.

### Comparative Preparation Example 11: Li₂S-CNF-LiI, 600 rpm, 10 hr, Two Stages, 20 G

### First Process

Li₂S and carbon nanofibers (CNFs) were mixed in a weight ratio of 30:10. The mixture was mechanically milled by utilizing a ball mill to prepare a Li₂S-CNF composite. Milling conditions were 25 °C, 600 rpm, and 10 hours. A milling energy applied to a sample during milling was 20 G.

### Second Process

The Li₂S-CNF composite and LiI were mixed in a weight ratio of 40:20. The mixture was mechanically milled by utilizing a ball mill to prepare a Li₂S-CNF-LiI composite. Milling conditions were 25 °C, 600 rpm, and 10 hours. A milling energy applied to a sample during milling was 20 G. The Li₂S-CNF-LiI composite was utilized as a composite cathode active material.

### Comparative Preparation Example 12: Li₂S-SE-CNF, 600 rpm, 10 hr, Two Stages, 20 G

### First Process

Li₂S and Li₆PS₅Cl solid electrolyte (SE) were mixed in a weight ratio of 30:20. The mixture was mechanically milled by utilizing a ball mill to prepare a Li₂S-SE composite. Milling conditions were 25 °C, 600 rpm, and 10 hours. A milling energy applied to a sample during milling was 20 G.

### Second Process

The Li₂S-SE composite and CNFs were mixed in a weight ratio of 50:20. The mixture was mechanically milled by utilizing a ball mill to prepare a Li₂S-SE-CNF composite. Milling conditions were 25 °C, 600 rpm, and 10 hours. A milling energy applied to a sample during milling was 20 G. The Li₂S-SE-CNF composite was utilized as a composite cathode active material.

### Comparative Preparation Example 13: Li₂S-LiI-CNF, 600 rpm, 2 hr, One Stage, 20 G

Li₂S, Lil, and carbon nanofibers (CNFs) were mixed in a weight ratio of 30:20:10. The mixture was mechanically milled by utilizing a ball mill to prepare a Li₂S-Lil-CNF composite. Milling conditions were 25 °C, 600 rpm, and 2 hours. A milling energy applied to a sample during milling was 20 G. The Li₂S-LiI-CNF composite was utilized as a composite cathode active material.

### Preparation of Cathode

### Example 1: Al Current Collector/Adhesion Binder Layer (Polydopamine Binder Layer)/Li₂S-LiI-CNF, PTFE-containing Dry Cathode

A polydopamine layer-forming composition was prepared by mixing 50 mL of a buffer solution having a pH of 8.5 per 0.1 g of dopamine and diluted by adding ethanol to improve viscosity and dry properties without affecting the pH during a process. The composition was applied onto an Al foil, as a cathode current collector, by spray coating via a nozzle and then dried at about 25 °C to form a polydopamine layer (i.e., polydopamine binder layer) having a thickness of about 10 nm on the cathode current collector.

The Li₂S-LiI-CNF composite prepared in Preparation Example 4 was utilized as a cathode active material. As a solid electrolyte, Li₆PS₅Cl (D50=3.0 µm, crystalline) that is argyrodite-type or kind crystal was prepared. As a binder, PTFE was prepared.

The Li₂S-LiI-CNF composite and the sulfide-based solid electrolyte were mixed in a mixer for 2 minutes to prepare a mixture.

PTFE as a cohesion binder was added to the mixture and mixed therewith utilizing a mixer for 20 seconds, and powder of a cathode mixture obtained thereby was kneaded and rolled to a thickness of about 100 µm to about 150 µm to prepare a cathode.

The composite cathode active material, a solid electrolyte, and a cohesion binder (PTFE) were mixed in a weight ratio of 60:39:1.0 to prepare a cathode mixture. The cathode mixture was obtained by dry mixing utilizing a ball mill. An amount of PTFE, as the cohesion binder, was 500 parts by weight based on 10 parts by weight of polydopamine of the adhesion binder layer.

The cathode mixture was disposed on the Al foil on which the adhesion binder layer was located and plate-pressed at a pressure of 200 MPa for 10 minutes to prepare a dry cathode. The cathode had a thickness of about 120 µm. The cathode active material layer had a thickness of about 100 µm, and an Al foil had a thickness of about 20 µm. An area of the cathode active material layer was identical to an area of the cathode current collector.

### Example 2: Al Current Collector/Adhesion Binder Layer (PAA Binder Layer)/ Li₂S-Lil-CNF, PTFE-containing Dry Cathode

A cathode was prepared in substantially the same manner as in Example 1, except that an adhesion binder layer was formed by utilizing polyacrylic acid lithium (LiPAA) as follows.

First, an aqueous solution of lithium polyacrylate was prepared. 5 g of polyacrylic acid was mixed with 3.03 g of LiOH in 127.5 g of deionized water, and the mixture was stirred at room temperature (25 °C) for 24 hours to prepare an aqueous solution including 4 wt% of lithium polyacrylate (weight average molecular weight: 450×10³).

The aqueous solution of lithium polyacrylate was coated on an Al foil and dried at 100 °C to form an adhesion binder layer having a thickness of about 1 µm.

### Example 3: Al Current Collector/Adhesion Binder Layer (Polydopamine Binder Layer)/Li₂S-LiI-CNF, PVDF-containing Dry Cathode

A cathode was prepared in substantially the same manner as in Example 1, except that PVDF was utilized as a cohesion binder instead of PTFE while preparing the cathode mixture.

### Example 4: Al Current Collector/Adhesion Binder Layer (PAA Binder Layer)/Li₂S-Lil-CNF, PVDF-containing Dry Cathode

A cathode was prepared in substantially the same manner as in Example 2, except that PVDF was utilized as a cohesion binder instead of PTFE while preparing the cathode mixture.

### Example 5: Al Current Collector/Adhesion Binder Layer (Polydopamine Binder Layer)/Li₂S-LiI-CNF, PTFE-containing Dry Cathode

A cathode was prepared in substantially the same manner as in Example 1, except that the weight ratio of the composite cathode active material: the solid electrolyte: the cohesion binder (PTFE) was 60:37:3.0 while preparing the cathode mixture.

### Comparative Example 1: Al Current Collector/Li₂S-Lil-CNF Composite-containing Dry Cathode

A cathode was prepared in substantially the same manner as in Example 1, except that an Al foil was utilized instead of the Al foil provided with an adhesion binder layer.

### Comparative Example 2: Al Current Collector/Simple mixture of Li₂S, LiI, and CNF-containing Dry Cathode

A cathode was prepared in substantially the same manner as in Example 1, except that the simple mixture of Li₂S, Lil, and CNF prepared in Comparative Preparation Example 2 was utilized instead of the Li₂S-LiI-CNF composite prepared in Preparation Example 4.

### Comparative Example 3: Al Current Collector/Polydopamine Binder Layer/Carbon Coating Layer/Li₂S-LiI-C-containing Cathode

A cathode was prepared in substantially the same manner as in Example 1, except that a carbon coating layer was formed on the polydopamine layer according to the following process.

A carbon coating layer-forming composition was prepared by dispersing multi-walled carbon nanotubes in a N-methyl-2-pyrrolidone (NMP) solution in which 10 wt% of polyvinylidene fluoride (as a binder) was dissolved.

In the carbon coating layer-forming composition, an amount of the multi-walled carbon nanotubes was 10 parts by weight, an amount of NMP was 80 parts by weight, and an amount of the binder was 10 parts by weight. The composition was coated on the surface of the polydopamine layer and dried at 120 °C for 4 hours to form a carbon coating layer having a thickness of about 100 nm on the polydopamine layer.

### Reference Example 1: Cathode Current Collector/Polydopamine Binder Layer/Cathode Active Material Layer

A cathode was prepared in substantially the same manner as in Example 1, except that an adhesion binder layer was formed on an Al foil as follows, and a cathode active material layer by utilizing a cathode mixture was formed on the adhesion binder layer.

A polydopamine layer-forming composition was prepared by mixing 50 mL of a buffer solution having a pH of 8.5 per 0.1 g of dopamine and diluted by adding ethanol to improve viscosity and dry properties without affecting the pH during a process. The composition was spray-coated on an Al foil via a nozzle and dried at about 25 °C to form a polydopamine coating layer having a thickness of about 10 nm to form a cathode current collector/polydopamine layer/cathode active material layer stack structure.

### Preparation of Solid Secondary Battery

### Example 6: Al Current Collector/Carbon/Li₂S-LiI-C-containing Dry Cathode//Sulfide-based Solid Electrolyte (SE)//Ag-C coated SUS Preparation of Cathode

The cathode of Example 1 was utilized.

### Preparation of Anode

An SUS foil having a thickness of 10 µm was prepared as an anode current collector. Carbon black (CB) with a primary particle diameter of about 30 nm and particles of silver (Ag) with an average particle diameter of about 60 nm were prepared as anode active materials.

4 g of mixed powder of the carbon black (CB) and silver (Ag) particles in a weight ratio of 3:1 was added to a container, and 4 g of a NMP solution including 7 wt% of a PVDF binder (# 9300 manufactured by Kureha Corporation) was added thereto to prepare a mixed solution. NMP was gradually added to the mixed solution while stirring to prepare a slurry. The prepared slurry was applied to an SUS sheet utilizing a bar coater and dried in the air at 80 °C for 10 minutes, and then dried in a vacuum at 40 °C for 10 hours to prepare a stack structure. The prepared stack structure was cold rolled by a cold roll press to planarize the surface to prepare an anode having a first anode active material layer/anode current collector structure. A thickness of the first anode active material layer was about 15 µm. An area of the first anode active material layer was identical to that of the anode current collector.

### Preparation of Solid Electrolyte Layer

A LisPSsCI solid electrolyte (D₅₀=3.0 µm, crystalline), as an argyrodite-type or kind crystalline, was prepared. 1.5 parts by weight of an acrylic binder was added to 98.5 parts by weight of the solid electrolyte to prepare a mixture. Octyl acetate was added to the prepared mixture while stirring to prepare a slurry. The prepared slurry was applied to a 15 µm-thick non-woven fabric placed on a 75 µm-thick PET substrate by utilizing a bar coater, and then dried in the air at 80 °C for 10 minutes to obtain a stack structure. The prepared stack structure was dried at 80 °C in a vacuum for 2 hours to prepare a solid electrolyte layer.

### Inactive Member

A slurry prepared by mixing pulp fibers (cellulose fibers), glass fibers, aluminum hydroxide (Al(OH)₃), an acrylic binder, and a solvent was molded in a gasket form, and the solvent was removed therefrom to prepare a flame-retardant inactive member.

A weight ratio of pulp fibers (cellulose fibers), glass fibers, aluminum hydroxide (Al(OH)₃), and the acrylic binder was 20:8:70:2. The inactive member had a thickness of 120 µm.

Before arranging the prepared flame-retardant inactive member on the solid electrolyte layer, heat treatment was performed in a vacuum at 80 °C for 5 hours to remove moisture and/or the like from the flame-retardant inactive member.

### Preparation of All Solid Secondary Battery

Referring to FIG. 4, the solid electrolyte layer was disposed on the anode such that the first anode active material layer was in contact with the solid electrolyte layer, and the cathode was disposed on the solid electrolyte layer. A gasket was arranged around the cathode to surround the cathode and to be in contact with the solid electrolyte layer to prepare a stack structure. The gasket had a thickness of about 120 µm. As the gasket, the flame-retardant inactive member was utilized. The gasket was located to be in contact with side surfaces of the cathode and the solid electrolyte layer. The cathode was located at a central region of the solid electrolyte layer, and the gasket was located to surround the cathode and to extend to an end portion of the solid electrolyte layer. An area of the cathode was about 90 % of an area of the solid electrolyte layer, and the gasket was located over the entire area of the remaining 10 % area of the solid electrolyte layer on which the cathode was not located.

The prepared stack structure was pressed by a plate press at 85 °C at a pressure of 500 MPa for 30 minutes. By such pressing treatment, the solid electrolyte layer was sintered to improve battery characteristics. The sintered solid electrolyte layer had a thickness of about 45 µm. The argyrodite-type or kind crystalline Li₆PS₅Cl solid electrolyte included in the sintered solid electrolyte layer had a density of 1.6 g/cc. An area of the solid electrolyte layer was the same as an area of the anode.

The pressed stack structure was added to a pouch and sealed to prepare an all solid secondary battery. Portions of the cathode current collector and the anode current collector were separately extended to the outside of the sealed battery to be utilized as a cathode terminal and an anode terminal, respectively.

### Examples 7 to 10

All solid secondary batteries were each prepared in substantially the same manner as in Example 6, except that the cathodes prepared in Examples 2 to 5 were utilized, respectively.

### Comparative Examples 4 to 6

All solid secondary batteries were each prepared in substantially the same manner as in Example 6, except that the cathodes prepared in Comparative Examples 1 to 3 were utilized, respectively.

### Reference Example 2

An all solid secondary battery was prepared in substantially the same manner as in Example 6, except that the cathode prepared in Reference Example 1 was utilized instead of the cathode prepared in Example 1.

### Evaluation Example 1: XRD Analysis and SEM Analysis

Bare Li₂S and pulverized Li₂S utilized in Preparation Example 1 and the Li₂S-Lil-CNF composite prepared in Preparation Example 4 were each evaluated by measuring XRD spectra via Cu Kα radiation. Measurement results are shown in Table 1.

Sizes of Li₂S crystallites and lattice constants were each derived from first peaks observed at a diffraction angle (2θ) of 27° ± 2.0° corresponding to crystal plane (111) in the obtained XRD spectra.

The pulverized Li₂S was prepared by milling under the same conditions, except that the mixture including Li₂S and LiI in the first stage of Preparation Example 4 was changed to Li₂S. The second stage was not performed.

Bare Li₂S and pulverized Li₂S utilized in Preparation Example 1 and the Li₂S-Lil-CNF composite prepared in Preparation Example 4 were each evaluated by measuring particle size of the composites (i.e., D50 particle diameter) by a particle size analyzer (PSA) utilizing a laser and particle size of Li₂S of the composite by a scanning electron microscope. Measurement results are shown in Table 1.

**Table 1**

| Category | Size of Li₂S crystallites [nm] | Size of Li₂S particles [µm] |
|---|---|---|
| Bare Li₂S | 65 | 8 |
| Pulverized Li₂S | 15 | - |
| Li₂S-LiI-CNF composite | Less than 10 | Less than 1 |

As shown in Table 1, the particle size and the crystallite size of the Li₂S-LiI-CNF composite were significantly decreased compared to Li₂S. The Li₂S-LiI-CNF composite included a Li₂S-Lil solid solution, the Li₂S crystallites had a size less than 9.9 nm, and the composite had a Li₂S particle size of 2 µm or less.

Although not shown in Table 1, the Li₂S-LiI-CNF composite of Preparation Example 4 had a lattice constant greater than that of the bare Li₂S. It was considered that the increased lattice constant of the Li₂S-LiI-CNF composite compared to the lattice constant of the bare Li₂S was caused by LiI dissolved in the Li₂S crystals. Therefore, it was confirmed that the Li₂S-LiI-CNF composite formed a solid solution.

Although not shown in Table 1, the Li₂S-LiI-CNF composite of Preparation Example 4 had a particle size of about 5 µm.

### Evaluation Example 2: XRD Analysis and SEM Analysis

XRD spectra of the composite cathode active materials (i.e., composites) prepared in Preparation Examples 4 to 7 and Comparative Preparation Examples 3 to 13 were each obtained by utilizing Cu Kα radiation. Sizes of Li₂S crystallites calculated from first peaks observed at a diffraction angle (2θ) of 27° ± 2.0° corresponding to crystal plane (111) in the obtained XRD spectra are shown in Table 2. The size of crystallites was calculated by utilizing Sherrer Equation.

Particle diameters of Li₂S of the composite cathode active materials prepared in Preparation Examples 4 to 7 and Comparative Preparation Examples 3 to 13 were each measured utilizing an SEM. The Li₂S particle diameter of the composite cathode active material was an arithmetic average of particle diameters of a plurality of particles measured utilizing software from a scanning electron microscope image. Measurement results are shown in Table 2. In Table 2, size refers to D50.

**Table 2**

| Category | First process milling | Second process milling | Formati on of solid solution | Size of Li₂S crystallites [nm] | Size of Li₂S particles [µm] |
|---|---|---|---|---|---|
| Preparation Example 4 (28 G, 10 hr) (Li₂S-LiI-CNF composite) | 600 rpm, 28 G, 10 hr | 600 rpm, 28 G, 10 hr | ○ | 9.8 | Less than 1 |
| Preparation Example 5 (28 G, 8 hr)(Li₂S-LiI-CNF composite) | 600 rpm, 28 G, 8 hr | 600 rpm, 28 G, 8 hr | ○ | 7.2 | Less than 1 |
| Preparation Example 6 (28 G, 6 hr)(Li₂S-Li I-CNF composite) | 600 rpm, 28 G, 6 hr | 600 rpm, 28 G, 6 hr | ○ | 8.2 | Less than 1 |
| Preparation Example 7 (28 G, 4 hr)(Li₂S-LiI-CNF composite) | 600 rpm, 28 G, 4 hr | 600 rpm, 28 G, 4 hr | ○ | 9.5 | Less than 1 |
| Comparative Preparation Example 3 (28 G, 1 hr)(Li₂S-LiI-CNF composite) | 600 rpm, 28 G, 1 hr | 600 rpm, 28 G, 1 hr | ○ | 20.1 | Less than 1 |
| Comparative Preparation Example 4 (28 G, 20 hr)(Li₂S-Li I-CNF composite) | 600 rpm, 28 G, 20 hr | 600 rpm, 28 G, 20 hr | △ | 11.8 | Less than 1 |
| Comparative Preparation Example 5 (Li₂S-LiI-CNF composite) | 510 rpm, 20 G, 10 hr | 510 rpm, 20 G, 10 hr | ○ | 9.9 | less than 1 |
| Comparative Preparation Example 6 (10 G, 10 hr)(Li₂S-LiI-CNF composite) | 300 rpm, 10 G, 10 hr | 300 rpm, 10 G, 10 hr | × | 27.2 | 3 |
| Comparative Preparation Example 7 (30 G, 10 hr)(Li₂S-LiI-CNF composite) | 700 rpm, 30 G, 10 hr | 700 rpm, 30 G, 10 hr | Δ | 15.6 | 2 |
| Comparative Preparation Example 8 (0 G) (simple mixture of Li₂S and CNF) | - | - | × | 66.67 | 8 |
| Comparative Preparation Example 9 (20 G, 2 hr)(Li₂S-CNF composite) | 600 rpm, 20 G, 2 hr | - | × | 24.07 | 3 |
| Comparative Preparation Example 10 (20 G, 10 hr)(Li₂S-CNF composite) | 600 rpm, 20 G, 10 hr | - | × | 9.89 | less than 1 |
| Comparative Preparation Example 11 (20 G, 10 hr)(Li₂S-CNF-LiI composite) | 600 rpm, 20 G, 10 hr | 600 rpm, 20 G, 10 hr | × | 15.2 | 2 |
| Comparative Preparation Example 12 (20 G, 10 hr)(Li₂S-SE-CNF composite) | 600 rpm, 20 G, 10 hr | 600 rpm, 20 G, 10 hr | × | 8.9 | Less than 1 |
| Comparative Preparation Example 13 (20 G, 2 hr)(Li₂S-LiI-CNF composite) | 600 rpm, 20 G, 2 hr | - | ○ | 22 | 3 |

As shown in Table 2, the Li₂S-LiI-CNF composites of Preparation Examples 4 to 7 each included a Li₂S-LiI solid solution, the Li₂S crystallites had a size less than 9.9 nm, and the composites had a Li₂S particle size of 2 µm or less.

In the Li₂S-LiI-CNF composite of Comparative Preparation Example 3, the size of Li₂S crystallite was 20.1 nm or more because a milling time decreased during preparing.

In the Li₂S-LiI-CNF composite of Comparative Preparation Example 4, LiI was phase separated as a separate phase because a milling time increased during preparing, and thus a solid solution was not formed and the size of Li₂S crystallites increased.

In the Li₂S-LiI-CNF composite of Comparative Preparation Example 6, a Li₂S-LiI solid solution was not formed because a milling energy excessively decreased during preparing.

In the Li₂S-LiI-CNF composite of Comparative Preparation Example 7, a Li₂S-LiI solid solution was not properly formed due to heat generated by increased milling energy during preparing.

The Li₂S-LiI-CNF composite was prepared in the first process of Comparative Preparation Example 13, and thus the composite included a Li₂S-Lil solid solution, but the size of Li₂S crystallites increased and the particle size of Li₂S of the composite exceeded 2 µm.

In the simple mixture of Li₂S and CNF of Comparative Preparation Example 8 and the composites of Comparative Preparation Examples 9, 10, and 12, solid solutions were not formed.

In the Li₂S-CNF-LiI composite of Comparative Preparation Example 11, a Li₂S-LiI solid solution was not properly formed because the Li₂S-CNF-LiI composite was prepared in the second process after preparing the Li₂S-CNF composite in the first process.

### Evaluation Example 3: Charging/discharging Test

Charging and discharging characteristics of each of the all solid secondary batteries prepared in Examples 6 to 10, Comparative Examples 4 to 6, and Reference Example 2 were evaluated by the following charging/discharging test.

The charging/discharging test was performed by placing each of the all solid secondary batteries in a thermostatic bath at 45 °C.

A first cycle was performed by charging at a constant current of 0.05 C for 20 hours until a battery voltage reached 2.8 V. Subsequently, the battery was discharged at a constant current of 0.05 C for 20 hours until the battery voltage reached 1.0 V.

Charging and discharging of the second cycle were performed under the same conditions as those of the first cycle.

A discharge capacity of the second cycle was utilized as a standard capacity.

A third cycle was performed at a constant current of 0.1 C for 10 hours until the battery voltage reached 2.8 V. Subsequently, the battery was discharged at a constant current of 0.1 C for 10 hours until the battery voltage reached 1.0 V.

After the third cycle, charging and discharging were repeated up to 50^{th} cycle under the same conditions as those of the third cycle. Measurement results are shown in Table 3.

Initial efficiency is represented by Equation 1 and capacity retention ratio is defined as shown Equation 2. Initial Efficiency [%] = [discharge capacity of 1st cycle/charge capacity of 1st cycle] × 100 Capacity Retention Ratio [%] = [discharge capacity of 23rd cycle /charge capacity of 3rd cycle] × 100

**Table 3**

| Category | 0.05 C discharge capacity (mAh/g) | Initial efficien cy (%) | Capacit y retentio n Ratio (%) (20 times) |
|---|---|---|---|
| Example 6 (Al Current Collector/Adhesion Binder Layer (Polydopamine Binder Layer)/Li₂S-LiI-CNF, PTFE-containing Dry Cathode) | 911 | 78.8 | 90.5 |
| Example 7 (Al Current Collector/Adhesion Binder Layer (PAA Binder Layer)/Li₂S-LiI-CNF, PTFE-containing Dry Cathode) | 922 | 79.2 | 91.9 |
| Example 8 (Al Current Collector/Adhesion Binder Layer (Polydopamine Binder Layer)/Li₂S-LiI-CNF, PVDF-containing Dry Cathode) | 918 | 81.1 | 89.2 |
| Example 9 (Al Current Collector/Adhesion Binder Layer (PAA binder layer)/Li₂S-LiI-CNF, PVDF-containing Dry Cathode) | 927 | 83.6 | 91.7 |
| Example 10 (Al Current Collector/Adhesion Binder Layer (Polydopamine Binder Layer)/Li₂S-LiI-CNF, PTFE-containing Dry Cathode) | 883 | 85.2 | 94.7 |
| Comparative Example 4 (Al Current Collector/Li₂S-Lil-CNF composite-containing Dry Cathode) | 709 | 72.6 | 59.1 |
| Comparative Example 5 (Al Current Collector/Li₂S, Lil, and CNF Simple Mixture-containing Dry Cathode) | 322 | 56.4 | 79.2 |
| Comparative Example 6 (Al Current Collector/Polydopamine Binder Layer/Carbon Coating Layer/ Li₂S-LiI-C-containing Cathode) | 868 | 80.2 | 81.2 |
| Reference Example 2 (Cathode Current Collector/Polydopamine Binder Layer/Cathode Active Material Layer) | 576 | 73.2 | 70.2 |

As shown in Table 3, each of the all solid secondary batteries of Examples 6 to 10 utilizing the cathodes of Examples 1 to 5 exhibited improved lifespan characteristics compared to all solid secondary batteries of Comparative Examples 4 to 6 utilizing the cathodes of Comparative Examples 1 to 3 and the all solid secondary battery of Reference Example 2. In the all solid secondary batteries including the polydopamine layer of Examples 8 and 10 or the all solid secondary battery including LiPAA of Example 9, discharge capacity was enhanced due to improved adhesion between the cathode current collector and the cathode active material layer, and the capacity retention ratio was increased due to stable contact between the cathode current collector and the cathode active material layer without detachment of the cathode active material although charging and discharging were repeated during cycles.

It was confirmed that a lithium metal layer, which is a second anode active material layer, was formed between the first anode active material layer and the anode current collector after initial charging in the all solid secondary batteries of Examples 6 to 10. These results were confirmed by cross-sections of the all solid secondary batteries obtained by SEM images. It was also confirmed that the Li₂S-LiI-CNF composites were located in pores between a plurality of particles of the sulfide-based solid electrolytes in an SEM image showing cross-sections of the solid electrolyte layer and cathode active material layer.

### Evaluation Example 4: Evaluation of Rate Characteristics

Rate characteristics of each of the all solid secondary batteries according to Examples 6 to 10 and Comparative Examples 4 to 6 were evaluated. The charging/discharging test was performed by placing each of the all solid secondary batteries in a thermostatic bath at 45 °C.

A first cycle was performed by charging at a constant current of 0.05 C for 20 hours until a battery voltage reached 2.8 V. Subsequently, the battery was discharged at a constant current of 0.05 C for 20 hours until the battery voltage reached 1.0 V.

Charging and discharging of the second cycle were performed under the same conditions as those of the first cycle.

A third cycle was performed at a constant current of 0.1 C for 10 hours until the battery voltage reached 2.8 V. Subsequently, the battery was discharged at a constant current of 0.1 C for 10 hours until the battery voltage reached 1.0 V. A fourth cycle was performed under the same conditions as those of the third cycle.

The batteries were each rested for 10 minutes after every charging/discharging cycle. Some results of a room temperature charging/discharging test are shown in Table 4. Rate characteristics are defined as shown in Equation 3. Rate characteristics [%] = [discharging capacity at 4th cycle/discharging capacity at 2nd cycle] × 100

**Table 4**

| Category | Rate characteristics (0.1 C/0.05 C) |
|---|---|
| Example 6 (Al Current Collector/Adhesion Binder Layer (Polydopamine Binder Layer)/Li₂S-LiI-CNF & PTFE-containing Dry Cathode) | 96.2 |
| Example 7 (Al Current Collector/Adhesion Binder Layer (PAA Binder Layer)/Li₂S-LiI-CNF & PTFE-containing Dry Cathode) | 95.8 |
| Example 8 (Al Current Collector/Adhesion Binder Layer (Polydopamine Binder Layer)/Li₂S-LiI-C & PVDF-containing Dry Cathode) | 94.8 |
| Example 9 (Al Current Collector/Adhesion Binder Layer (PAA Binder Layer)/Li₂S-LiI-CNF & PVDF-containing Dry Cathode) | 94.2 |
| Example 10 (Al Current Collector/Adhesion Binder Layer (Polydopamine Binder Layer)/Li₂S-LiI-CNF & PTFE-containing Dry Cathode) | 93.6 |
| Comparative Example 4 (Al Current Collector/Li₂S-Lil-CNF Composite-containing Dry Cathode) | 80.5 |
| Comparative Example 5 (Al Current Collector/Li₂S, Lil, and CNF simple mixture-containing Dry Cathode) | 56.3 |
| Comparative Example 6 (Al Current Collector/Polydopamine Binder layer/Carbon Coating Layer/Li₂S-LiI-CNF-containing Cathode) | 93.2 |
| Reference Example 2 (Cathode Current Collector/Polydopamine Binder Layer/Cathode Active Material Layer) | 84.2 |

As shown in Table 4, each of the all solid secondary batteries of Examples 6 to 10 had improved rate characteristics compared to the all solid secondary batteries prepared in Comparative Examples 4 to 6 and Reference Example 2.

According to one or more aspects of embodiments of the present disclosure, by increasing adhesion between the substrate and the electrode, discharge capacity and rate characteristics were improved, and stable contact was obtained without detachment even after repeated contraction and expansion during cycles, thereby providing an all solid secondary battery having improved lifespan characteristics.

In present disclosure, "not include (or not including) a or any 'component'" "exclude (or excluding) a or any 'component'", "'component'-free", "free of 'component'" and/or the like refers to that the "component" not being added, selected or utilized as a component in the composition, but the "component" of less than a suitable amount may still be included due to other impurities and/or external factors.

As utilized herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The battery module, battery pack, battery management system, electric vehicle, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the appended claims and equivalents thereof.

## Claims

1. A cathode (10) for an all solid secondary battery (1), the cathode (10) comprising:
a cathode current collector (11);
an adhesion binder layer (13) on the cathode current collector (11) and comprising an adhesion polymer; and
a cathode active material layer (12) on the adhesion binder layer (13) and comprising a composite cathode active material and a cohesion binder,
wherein the composite cathode active material comprises a Li₂S-containing composite.

2. The cathode (10) as claimed in claim 1, wherein the adhesion polymer comprises at least one selected from among polydopamine, cation-substituted polycarboxylic acid, a copolymer of cation-substituted polycarboxylic acid, poly(norepinephrine), poly(meth)acrylamide, polyvinyl alcohol, polyhydroxyethyl(meth)acrylate, a methyl(meth)acrylate-co-(meth)acrylic acid copolymer, polymethyl(meth)acrylate, poly(meth)acrylic acid, and a styrene-(meth)acrylic acid copolymer.

3. The cathode (10) as claimed in claim 1 or 2, wherein a thickness of the adhesion binder layer (13) is about 5 nm to about 1 µm.

4. The cathode (10) as claimed in any of claims 1 to 3, wherein the cohesion binder is polytetrafluoroethylene, a polyvinylidene fluoride-based resin, a styrene-butadiene rubber, polytetrafluoroethylene, polyethylene glycol, polypropylene glycol, toluene diisocyanate, polymethylmethacrylate, polyacrylonitrile, polyvinylpyrrolidone, polyvinylacetate, poly(ethylene-co-vinyl acetate) copolymer, polyethylene oxide, cellulose acetate, cellulose acetate butyrate, cellulose acetate propionate, cyanoethyl pullulan, cyanoethyl polyvinylalcohol, cyanoethyl cellulose, cyanoethyl sucrose, pullulan, carboxyl methyl cellulose, a acrylonitrile-styrene-butadiene copolymer, polyimide, or any combination thereof.

5. The cathode (10) as claimed in any of claims 1 to 4, wherein the Li₂S-containing composite comprises a composite of Li₂S and a lithium salt, the composite of Li₂S and the lithium salt being represented by Li₂S-LiₐX_{b} (where 1≤a≤5 and 1≤b≤5), and
wherein X is I, Br, Cl, F, H, O, Se, Te, N, P, As, Sb, Al, B, OCI, PF₆, BF₄, SbF₆, AsF₆, ClO₄, AlO₂, AlCl₄, NO₃, CO₃, BH₄, SO₄, BO₃, PO₄, NCI, NCl₂, BN₂, or any combination thereof; and/or
wherein the Li₂S-containing composite further comprises a carbonaceous material,
the carbonaceous material comprises a fibrous carbonaceous material,
the fibrous carbonaceous material comprises a carbon nanostructure, the carbon nanostructure comprising carbon nanofibers, carbon nanotubes, carbon nanobelts, carbon nanorods, or any combination thereof, and
an amount of the carbonaceous material is about 1 wt% to about 20 wt%, based on a 100 wt% total weight of the Li₂S-containing composite; and/or
wherein the Li₂S-containing composite comprises a solid solution of Li₂S and a lithium salt,
the Li₂S-containing composite has a particle size of 10 µm or less, and
a size of Li₂S crystallites obtained from an X-ray diffraction spectrum of the Li₂S-containing composite is 20 nm or less; and/or
wherein in the Li₂S-containing composite, an amount of the Li₂S is greater than that of the lithium salt, and in the Li₂S-containing composite, a molar ratio of the Li₂S to the lithium salt is about 51:49 to about 95:5.

6. The cathode (10) as claimed in any of claims 1 to 5, wherein the lithium salt comprises a binary compound and/or a ternary compound, and
wherein the binary compound comprises Lil, LiBr, LiCI, LiF, LiH, Li₂O, Li₂Se, Li₂Te, Li₃N, Li₃P, LisAs, Li₃Sb, Li₃Al₂, LiB₃, or any combination thereof, and
the ternary compound comprises Li₃OCl, LiPF₆, LiBF₄, LiSbF₆, LiAsF₆, LiClO₄, LiAlO₂, LiAlC1₄, LiNOs, Li₂CO₃, LiBH₄, Li₂SO₄, Li₃BO₃, Li₃PO₄, Li₄NCl, Li₅NCl₂, Li₃BN₂, or any combination thereof.

7. The cathode (10) as claimed in any of claims 1 to 6, wherein an amount of the cohesion binder in the cathode active material layer (12) is about 1 part by weight to about 10 parts by weight, based on 100 parts by weight of a total weight of the cathode active material layer (12), and an amount of the cohesion binder is about 100 parts by weight to about 1000 parts by weight, based on 100 parts by weight of the adhesion polymer of the adhesion binder layer (13).

8. The cathode (10) as claimed in any of claims 1 to 7, wherein an amount of the Li₂S-containing composite is about 60 wt% to about 80 wt%, based on a 100 wt% total weight of the cathode active material layer (12).

9. The cathode (10) as claimed in any of claims 1 to 8, wherein the cathode active material layer (12) further comprises a solid electrolyte (30), the solid electrolyte (30) comprising a sulfide-based solid electrolyte,
preferably wherein the sulfide-based solid electrolyte comprises at least one selected from among Li₂S-P₂S₅, Li₂S-P₂S₅-LiX, wherein X is one or more selected from halogens, Li₂S-P₂S₅-Li₂O, Li₂S-P₂S₄-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂Ss-Lil, Li₂S-B₂S₃, Li₂S-P₂S₅-ZₘSₙ, wherein m and n are positive numbers, and Z is Ge, Zn, or Ga, Li₂S-GeS₂, Li₂S-SiS₂-Li₃PO₄, Li₂S-SiS₂-LiₚMO_{q}, wherein p and q are positive numbers and M is P, Si, Ge, B, Al, Ga, or In, Li₇₋ₓPS₆₋ₓClₓ, wherein 0≤x≤2, Li₁₋ₓPS₆₋ₓBrₓ, wherein 0≤x≤2, and Li₇₋ₓPS₆₋ₓIₓ, wherein 0≤x≤2,
the sulfide-based solid electrolyte comprises an argyrodite-type solid electrolyte, the argyrodite-type solid electrolyte comprises at least one selected from among Li₆PS₅Cl, Li₆PS₅Br, and LisPSsl,
the argyrodite-type solid electrolyte has a density of about 1.5 g/cc to about 2.0 g/cc,
the sulfide-based solid electrolyte is in the form of particles, and
an average particle diameter D50 of the sulfide-based solid electrolyte in the form of particles is about 0.1 µm to about 1.9 µm.

10. An all solid secondary battery (1) comprising:
a cathode (10) according to claims 1 to 9;
an anode (20); and
a solid electrolyte (30) layer between the cathode (10) and the anode (20),
, preferably wherein the anode (20) comprises a first anode active material layer (22).

11. The all solid secondary battery (1) as claimed in claim 10, wherein the anode (20) comprises an anode current collector (21) and a first anode active material layer (22) on a side of the anode current collector (21).

12. The all solid secondary battery (1) as claimed in claim 10 or 11,
wherein the first anode active material layer (22) is a metal layer, the metal layer comprising lithium or a lithium alloy, and/or
wherein the first anode active material layer (22) comprises an anode active material and a binder, the anode active material being in a form of particles, and an average particle diameter of the anode active material being 4 µm or less, and/or
wherein the first anode active material layer (22) comprises anode active material comprises at least one selected from among a carbonaceous anode active material and a metal and/or metalloid anode active material,
the carbonaceous anode active material comprises amorphous carbon, crystalline carbon, porous carbon, or any combination thereof,
the metal and/or metalloid anode active material comprises gold, platinum, palladium, silicon, silver, aluminum, bismuth, tin, zinc, or any combination thereof,
the anode active material comprises a mixture of first particles formed of amorphous carbon and second particles formed of a metal or metalloid anode active material, and
an amount of the second particles is about 1 wt% to 60 wt%, based on a 100 wt% total weight of the mixture.

13. The all solid secondary battery (1) as claimed in any of claims 10 to 12, further comprising a second anode active material layer (24) arranged: between the anode current collector (21) and the first anode active material layer (22); and/or between the anode current collector (21) and the solid electrolyte layer (30),
wherein the second anode active material layer (24) is a metal layer, the metal layer comprising lithium or a lithium alloy.

14. The all solid secondary battery (1) as claimed in any of claims 10 to 13, wherein the solid electrolyte layer (30) comprises a solid electrolyte (30), a gel electrolyte, or any combination thereof,
the solid electrolyte (30) comprises an oxide-based solid electrolyte, a polymer solid electrolyte, or any combination thereof, and
the gel electrolyte comprises a polymer gel electrolyte.

15. The all solid secondary battery (1) as claimed in any of claims 10 to 14, wherein the anode (20) comprises an anode current collector (21),
at least one of the cathode current collector (11) or the anode current collector (21) comprises a base film and a metal layer on at least one side of the base film,
the base film comprises a polymer, the polymer comprising polyethyleneterephthalate, polyethylene, polypropylene, polybutyleneterephthalate, polyimide, or any combination thereof, and
the metal layer comprises indium, copper, magnesium, stainless steel, titanium, iron, cobalt, nickel, zinc, aluminum, germanium, lithium, or an alloy thereof.
